**Europäisches Patentamt**

**European Patent Office**

**Office européen des brevets**

(19)

(11) Veröffentlichungsnummer : **0 162 352 B1**

# (12) EUROPÄISCHE PATENTSCHRIFT

(45) Veröffentlichungstag der Patentschrift :
06.07.88

(51) Int. Cl.⁴ : **F 16 H 45/02**, F 16 H 5/78

(21) Anmeldenummer : 85105331.4

(22) Anmeldetag : 02.05.85

(54) **Hydraulisches Steuerventilsystem für ein mehrgängiges, selbsttätig schaltendes, hydrokinetisch-mechanisches Wechselgetriebe für Kraftfahrzeuge.**

(30) Priorität : 14.05.84 DE 3417784

(43) Veröffentlichungstag der Anmeldung :
27.11.85 Patentblatt 85/48

(45) Bekanntmachung des Hinweises auf die Patenterteilung : 06.07.88 Patentblatt 88/27

(84) Benannte Vertragsstaaten :
BE DE FR GB IT NL SE

(56) Entgegenhaltungen :
EP-A- 0 064 148
EP-A- 0 164 553
WO-A-82 /027 53
DE-A- 2 227 555
DE-A- 2 707 174
DE-A- 2 913 181
GB-A- 2 031 532

(73) Patentinhaber : **FORD-WERKE AKTIENGESELL-SCHAFT**
**Ottoplatz 2 Postfach 21 03 69**
**D-5000 Köln 21 (DE)**
**BE DE IT NL SE**
**FORD MOTOR COMPANY LIMITED**
**Eagle Way**
**Brentwood Essex CM13 3BW (GB)**
**GB**
**FORD FRANCE SOCIETE ANONYME**
**344 Avenue Napoléon Bonaparte B.P. 307**
**F-92506 Rueil Malmaison Cedex (FR)**
**FR**

(72) Erfinder : **Bubach, Dieter**
**Schlagbaumsweg 160**
**D-5000 Köln 80 (DE)**
Erfinder : **Roeseling, Elmar**
**Maivenweg 16**
**D-5000 Köln 80 (DE)**
Erfinder : **Lauscher, Friedrich**
**Kommweg 88**
**D-5166 Kreuzau/Drove (DE)**
Erfinder : **Schulz, Winfried**
**Stefan-Lochner-Strasse 109**
**D-5024 Pulheim (DE)**
Erfinder : **Wolf, Dieter**
**Eva-Strasse 10**
**D-5000 Köln 90 (DE)**
Erfinder : **Schwarz, Fritz**
**Wohnpark 8**
**D-5010 Bergheim-Ahe (DE)**
Erfinder : **Lauven, Walter**
**Wohnpark Haus 8**
**D-5164 Nörvenich (DE)**

Erfinder : **Oberhausen, Anton**
**Wiesenweg 1**
**D-5144 Wegberg (DE)**
Erfinder : **Schmitz, Heinz**
**Quellenstrasse 79**
**D-5356 Swistal-Heimertzheim (DE)**

(74) Vertreter : **Ritzkowsky, Harald, Dipl.-Ing.**
**Ford-Werke Aktiengesellschaft Patentabteilung**
**Z/DRR-2 Ottoplatz 2**
**D-5000 Köln 21 (DE)**

2

**Beschreibung**

Die Erfindung geht aus von einem hydraulischen Steuerventilsystem für ein mehrgängiges, selbsttätig schaltendes hydrokinetisch-mechanisches Wechselgetriebe für Kraftfahrzeuge der im Oberbegriff des Patentanspruchs 1 erläuterten Art.

Aus der DE-A-22 27 555 der Anmelderin ist bereits ein hydraulisches Steuerventilsystem für ein mehrgängiges, selbsttätig schaltendes hydrokinetisch-mechanisches Wechselgetriebe für Kraftfahrzeuge bekannt, bei dem die verschiedenen Elemente eines Planetenräder-Wechselgetriebes, bestehend aus einem Vorschalt-Satz und einem Simpson-Satz, über Kolben — bzw. Servo-Einrichtungen, ausgehend von einem Handwählventil über ein den Leitungsdruck steuerndes Hauptdruck-Regulierventil und in Abhängigkeit von auf die Drehmomentanforderung bzw. die Fahrgeschwindigkeit ansprechenden Steuerventilen sowie den entsprechenden Kolben — bzw. Servo-Einrichtungen und den entsprechenden Gangstufen zugeordneten Schaltventilen betätigt wurden, wobei für besondere Betriebsbereiche spezielle Ventile vorgesehen wurden, um z. B. unterschiedliche Abwärtsschaltfunktionen für eine 4-3 Abwärtsschaltung zu steuern, abhängig davon, ob der Fahrer das Fahrzeug im Schiebebetrieb laufen läßt oder aber eine Drehmomentanforderung signalisiert.

Aus der EP-A2-0 064 148 ist ein hydraulisches Steuerventilsystem für ein mehrgängiges, selbsttätig schaltendes hydrokinetisch-mechanisches Wechselgetriebe für Kraftfahrzeuge bekannt, das einen Drehmomentwandler mit einer Überbrückungskupplung und ein Wechselgetriebe mit mehreren Planetenradsätzen aufweist, und das neben zwei untersetzten Betriebsbereichen, einem direkten Betriebsbereich und einen ins Schnelle übersetzten Betriebsbereich, einen sogenannten Schon- oder Schnellgang zur Verfügung stellt.

Das bekannte hydraulische Steuerventilsystem weist hierbei eine Steuerventilanordnung für die Steuerung der Drehmomentwandler-Überbrückungskupplung auf, das aus einem Überbrückungskupplung-Steuerventil und ein mit diesem zusammenwirkenden Überbrückungskupplung-Schaltventil besteht, wobei das Überbrückungskupplung-Schaltventil von Steuerdrücken derart beaufschlagt wird, daß es das Einrücken der Überbrückungskupplung geschwindigkeitsabhängig steuert, das Überbrückungskupplung-Schaltventil wird jedoch derart von Betriebsbereichdrücken angesteuert, daß ein Einrücken der Drehmomentwandler-Überbrückungskupplung nur im Schon- oder Schnellgang möglich ist, wohingegen ein Einrücken der Überbrückungskupplung stehts unterbunden wird, sobald sich das Getriebe in einem anderen Betriebsbereich befindet.

Dadurch ergibt sich der Nachteil, daß wenn das Kraftfahrzeug mit voller Belastung auf längeren Steigungen der Autobahn mit hoher Geschwindigkeit fährt, daß mehrgängige Wechselgetriebe aufgrund der hohen Belastungssituation in den dritten, meist direkten Betriebsbereich zurückschaltet und bei dem bekannten Getriebe dann sofort die Drehmomentwandler-Überbrückungskupplung gelöst wird. Dadurch wird bei dieser hohen Dauerbelastung eines Kraftfahrzeuges mit automatischem Getriebe ein erheblicher Schlupf im Drehmomentwandler auftreten, der zu erheblich höheren Verbrauchswerten führt.

Es soll ein hydraulisches Steuerventilsystem dieser Art für ein mehrgängiges, selbsttätig schaltendes, hydrokinetisch-mechanisches Wechselgetriebe für Kraftfahrzeuge geschaffen werden, wie es in der EP-A-164 553 der Anmelderin mit Priorität vom 12. Mai 1984 (Stand der Technik nach Art. 54(3) EPÜ) beschrieben ist, und das sich von dem in der oben genannten DE-A-2 227 555 erläuterten Wechselgetriebe im Wesentlichen dadurch unterscheidet, daß einerseits eine Wandler-Überbrückungskupplung vorgesehen ist und andererseits der vierte Vorwärtsgang als Schongang ausgelegt ist.

Die Aufgabe der Erfindung ist es, ein hydraulisches Steuersystem der erläuterten bekannten Art derart zu verbessern, daß eine entsprechende Steuerung für die Wandler-Überbrückung für den 3. und 4. Gang sowohl im Drehmomentbetrieb als auch eine Ansteuerungslogik für den als Schongang ausgelegten 4. Gang eine Steuerung der 3-4-Schiebebetrieb-Hochschaltung, eine Steuerung zur Verhinderung des 4. Ganges bei Kick-Down, sowie eine Steuerung zum geschwindigkeitsabhängigen Verhindern des Einrückens des 2. und 1. Ganges und des Rückwärtsganges bei Wählhebel-Fehlbedienungen geschaffen wird.

Darüberhinaus sollen im hydraulischen Steuerventilsystem des vorgegebenen Getriebes vorhandene Steuerfunktionen modifiziert werden, um eine Verbesserung der 3-2 Band-Kupplung-Drehmomentanforderung-Abwärtsschaltungen bzw. 2-3 Schiebebetrieb-Hochschaltungen sowie der Ansteuerung der Kupplungen bei der Schaltpositionswahl zu erzielen und die 3-2 Drehmomentanforderungs-Abwärtsschaltcharakteristik in Richtung eines agileren Ansprechens modifiziert werden.

Gemäß der Erfindung wird diese Aufgabe gelöst, indem bei einem hydraulischen Steuerventilsystem gemäß dem Oberbegriff des Patentanspruchs 1 die im Kennzeichenteil des Anspruchs 1 und der folgenden Ansprüche aufgezeigten Merkmale angewendet werden.

Die Erfindung wird anhand eines in den beiliegenden Zeichnungen gezeigten Ausführungsbeispieles näher erläutert.

Es zeigt :

Fig. 1 a-g schematische Schaubilder des mehrgängigen, hydrokinetisch-mechanischen Getriebes mit Schongang, wobei die in den unterschiedlichen Gängen wirksamen Getriebeelemente hervogehoben sind ;

Fig. 2 eine Aufstellung über die bei den am Handwählventil eingestellten Betriebsbereichen in den unterschiedlichen Gängen eingerückten bzw. angelegten Kupplungen und Bremsen ;

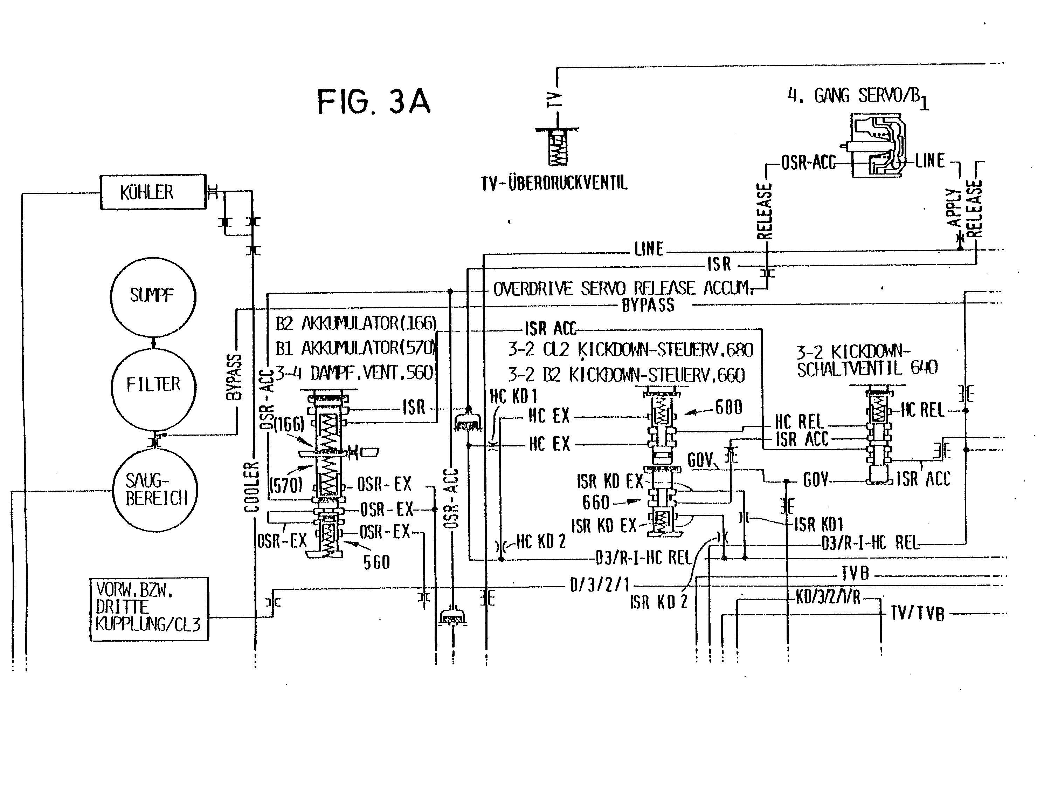

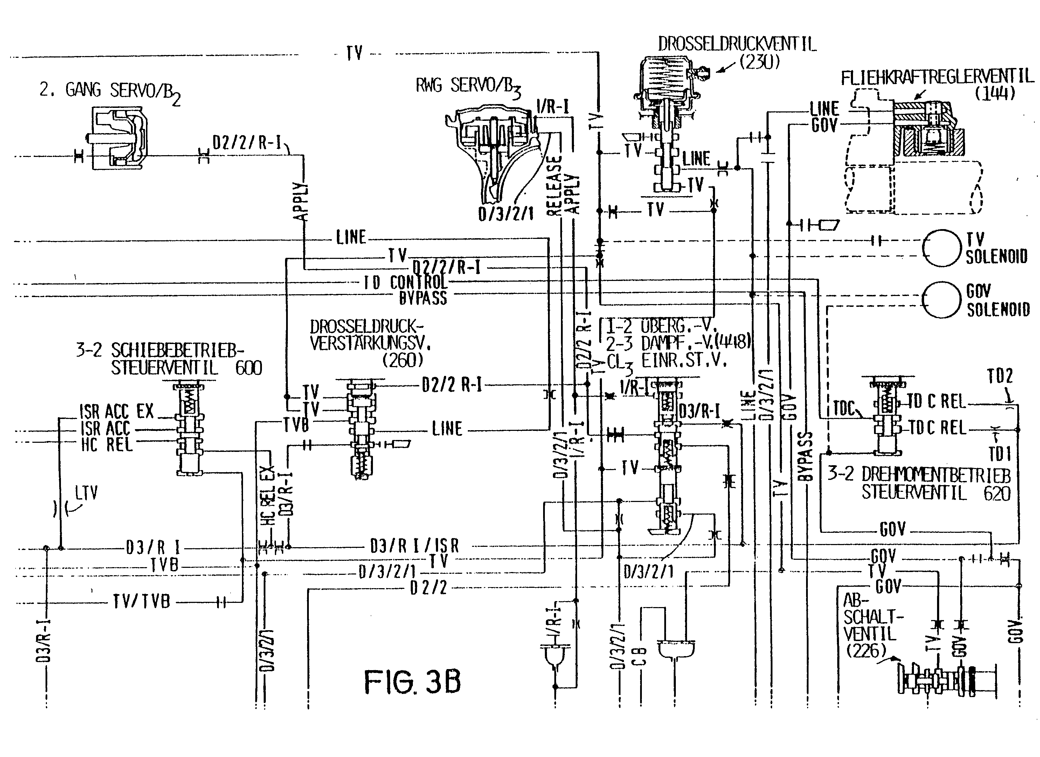

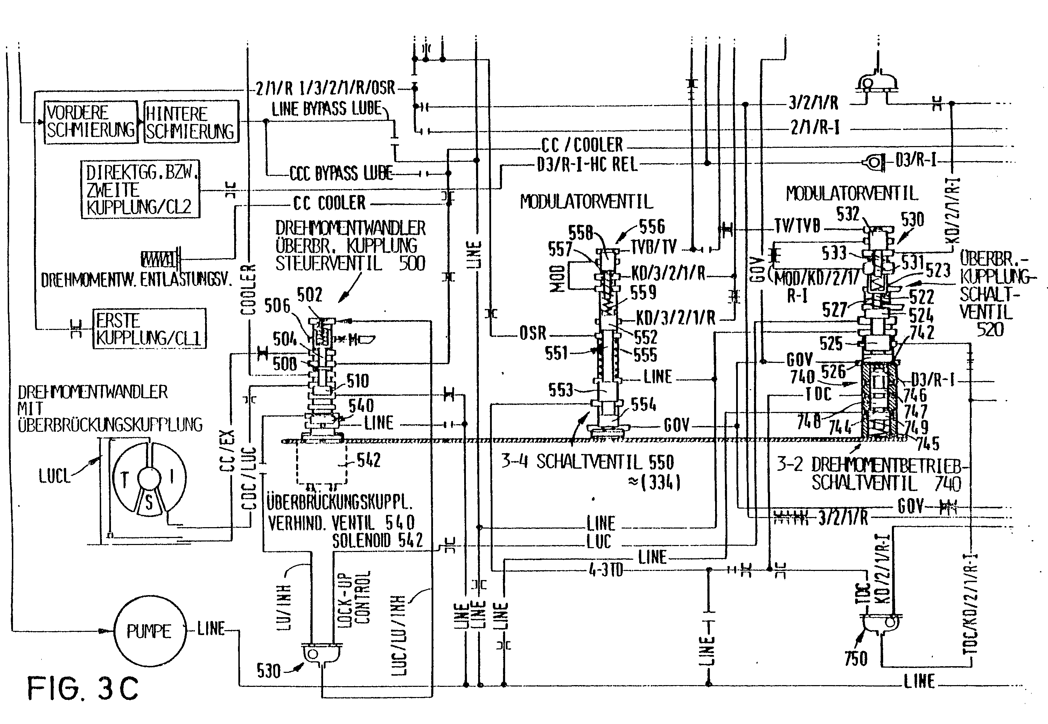

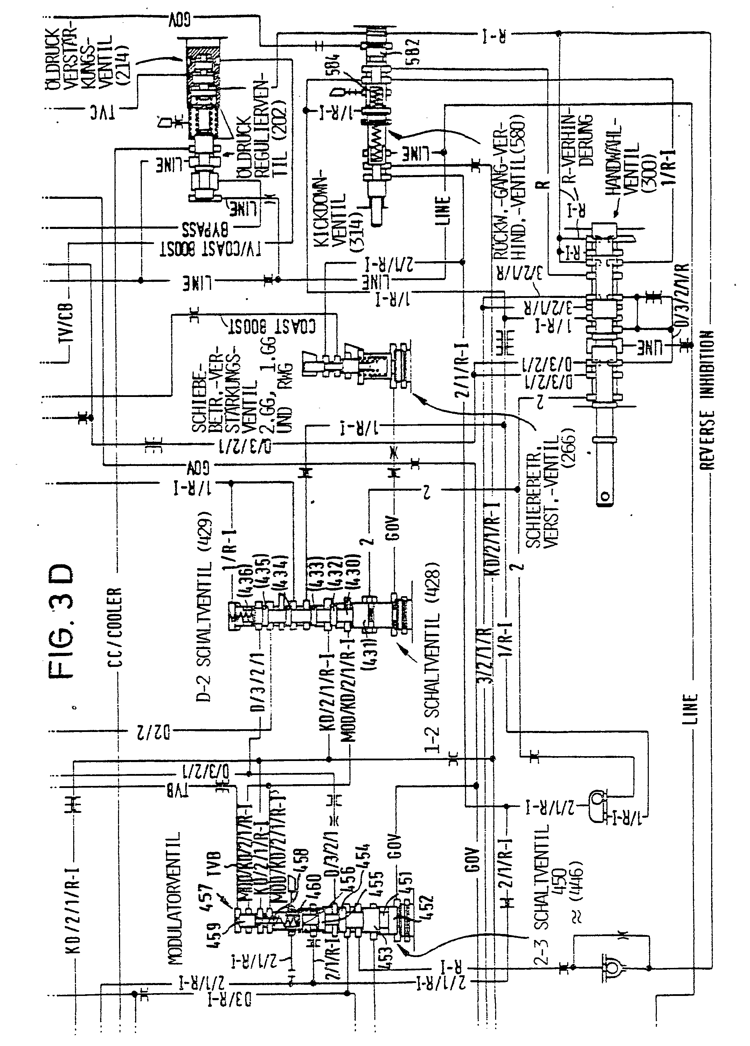

Fig. 3 A, B, C und D eine Gesamtanordnung des hydraulischen Steuerventilsystems mit einer Vielzahl von an sich bekannten Schalt- und Steuerventilen, die mit ihren entsprechenden Bezeichnungen versehen sind, denen in Klammer die Bezugszeichen zugefügt sind, mit denen diese Ventile in der bekannten DE-OS 22 27 555 bezeichnet sind. Die erfindungsgemäßen zusätzlichen Steuerventile bzw. die modifizierten Steuerventile sind hierbei durch ein hinterlegtes Raster hervorgehoben und die die einzelnen Ventile verbindenden Leitungen sind mit Buchstaben- und Zahleneinfügungen versehen, die angeben, in welchem Betriebszustand die jeweilige Leitung welchen Druck führt ;

Fig. 4 eine Schaltcharakteristik des hydraulischen Steuerventilsystems in Fig. 3.

Fig. 5 eine Tabelle der aus der bekannten DE-OS 22 27 555 vorgegebenen Schaltungslogik ;

Fig. 6 eine Tabelle der erfindungsgemäßen, erweiterten Schaltungslogik.

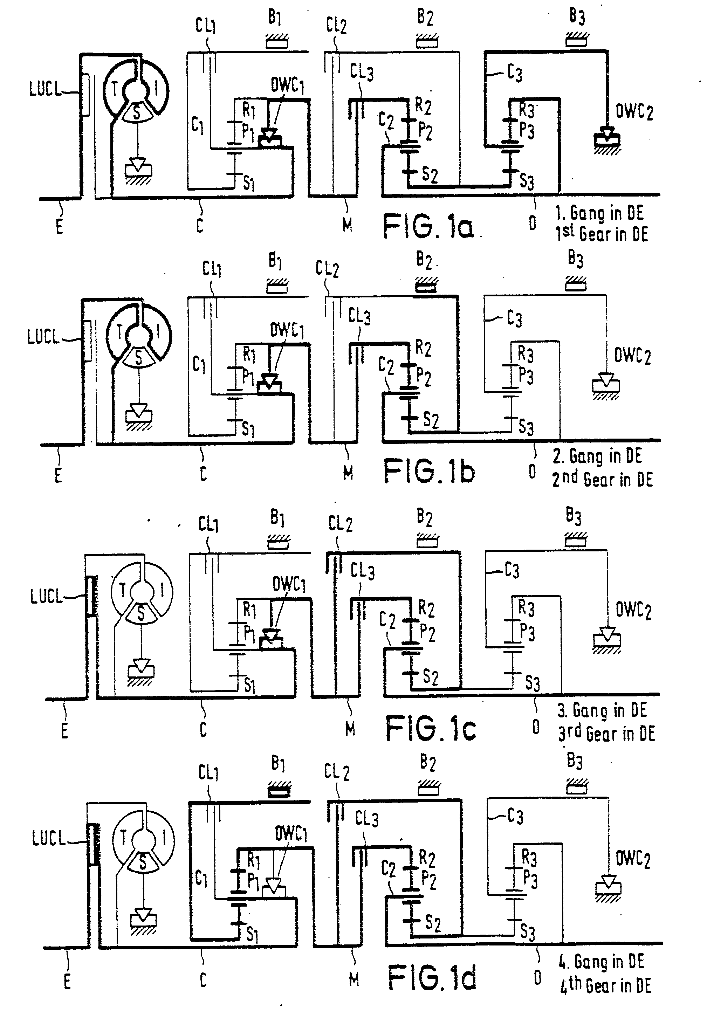

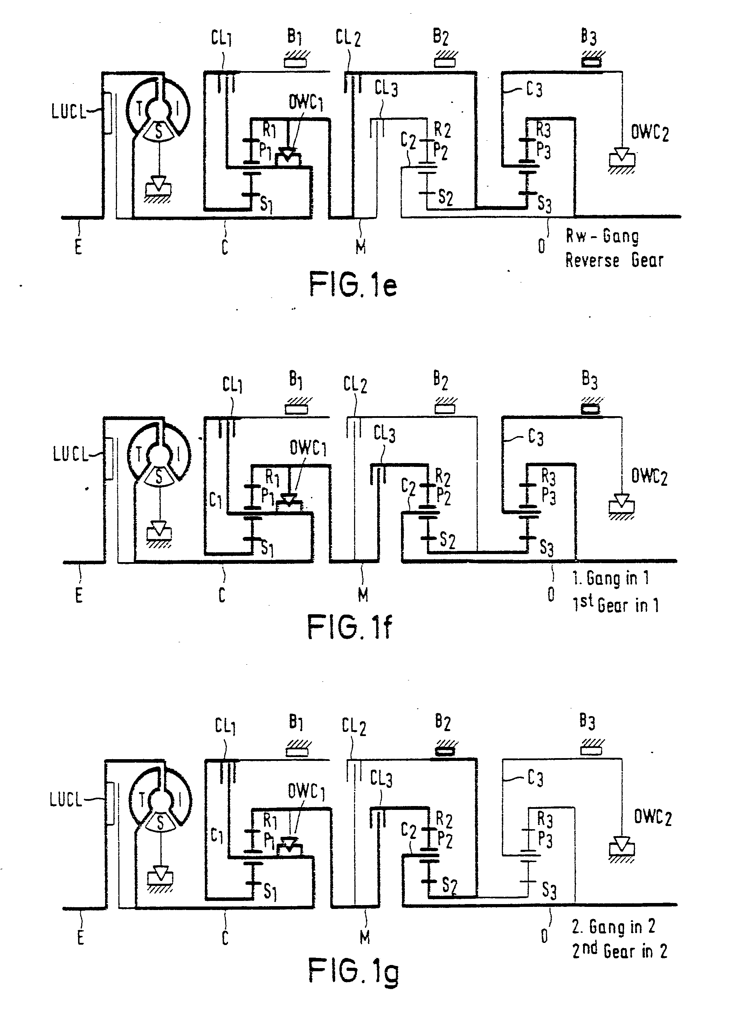

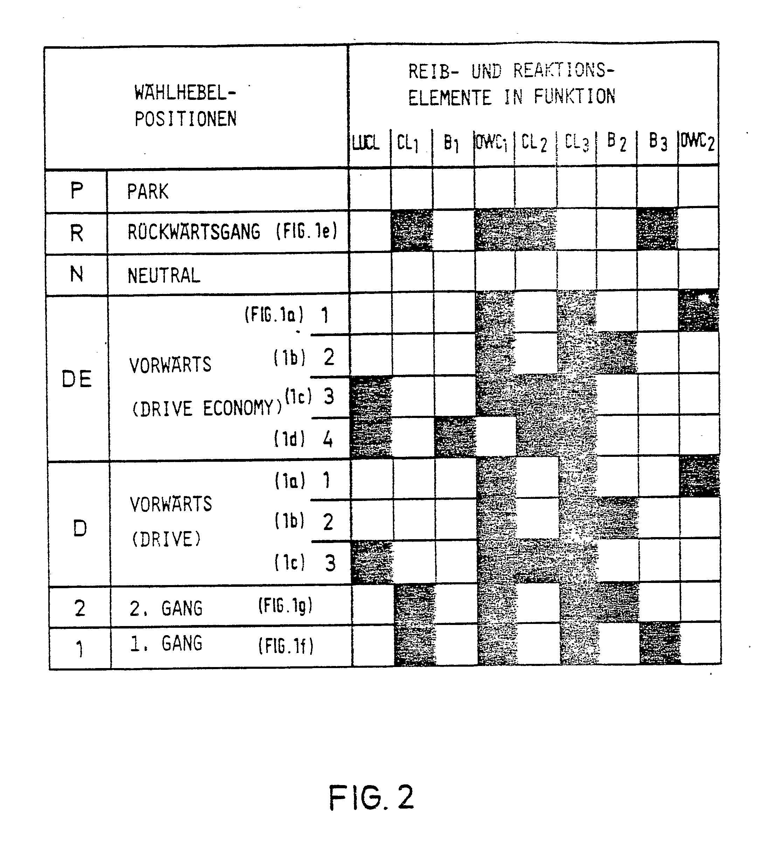

Zunächst wird auf die Figuren 1 und 2 Bezug genommen, aus denen der Getriebeaufbau und die in den unterschiedlichen Gangstufen betätigten Kupplungen und Bremsen zu entnehmen sind.

Wie aus Fig. 1 zu ersehen ist, besteht die Getriebeanordnung aus einem Motorantrieb E, der mit dem Pumpenteil I eines hydrokinetischen Drehmomentwandlers treibend verbunden ist. Das Turbinenteil T, der unter Zwischenschaltung des üblichen Statorteiles S vom Pumpenteil I getrieben wird, treibt über eine Wandler- bzw. Antriebswelle C den Planetenträger C1 eines Vorschalt-Satzes an.

Darüberhinaus ist im Bereich des Drehmomentwandlers eine Überbrückungskupplung LUCL vorgesehen, die wahlweise eingerückt werden kann.

Der Vorschalt-Satz weist ein Sonnenrad S1, Planetenräder P1 und ein Ringrad R1 auf. Das Sonnenrad S1 ist mit einer Bremstrommel verbunden, die von einem Bremsband B1 umfaßt wird und die gleichzeitig einen Teil einer Kupplung CL1 bildet. Das Ringrad R1 bildet den Abtrieb des Vorschalt-Satzes und ist mit einer Mittenwelle M treibend verbunden.

Das dem Vorschalt-Satz über die Antriebswelle-Wandlerwelle C mitgeteilte Drehmoment kann einerseits durch Einrücken der Kupplung CL1, die das Sonnenrad S1 mit dem Planetenträger C1 verbindet, in beiden Drehrichtungen übertragen werden, oder wird im Drehmomentbetrieb im 1., 2. und 3. Gang durch das Sperren einer zwischen dem Planetenträger C1 und der Mittenwelle M angeordneten Überholkupplung OWC1 in Antriebsdrehrichtung übertragen.

Die Mittenwelle M bildet das Eingangsglied für einen bekannten Simpson-Satz, der in üblicher Weise zwei Eingangskupplungen aufweist, von denen die Kupplung CL2 die miteinander verbundenen Sonnenräder S2 und S3 antreiben kann und von denen die Kupplung CL3 das Ringrad R2 antreiben kann. Der Planetenträger C2 sowie das Ringrad R3 sind hierbei mit der Abtriebswelle O des Getriebes treibend verbunden.

Eine dritte Bremse B3 ist vorgesehen, um den Planetenträger C3 in beiden Drehrichtungen festzulegen und zusätzlich ist eine weitere hintere, zweite Überholkupplung bzw. — bremse OWC2 vorgesehen, um den Planetenträger C3 in einer Drehrichtung festzulegen.

Aus Fig. 2 sind die in den durch die Stellung des Handwählventiles gewählten Schaltpositionen in den einzelnen Gangstufen eingerückten und betätigten Kupplungen und Bremsen zu ersehen.

In der Schaltposition « P », entsprechend « Parken » erfolgt keine Steuerung. In dieser Position wird die Motordrehzahl über den Wandler und die Antriebswelle C zum Planetenträger C1 geleitet. Der auf dem Planetenträger C1 aufgepreßte Freilaufinnenring der Überholkupplung OWC1 leitet über die in Motordrehrichtung sperrenden Freilaufklemmkörper das Moment auf den Freilaufaußenring, der von der Mittenwelle M gebildet wird. Die Mittenwelle M ihrerseits treibt in starrer Verbindung den Vorwärtskupplungskörper. Der Kraftfluß endet hier, da sowohl die Vorwärtskupplung CL3 als auch die Rückwärts- und Direktgangkupplung CL2 gelöst sind. Zusätzlich wird die Abtriebswelle O noch durch einen Parkmechanismus blockiert, der unterhalb von etwa 6 km/h einrastet.

In der Schaltposition « R », dem Rückwärtsgang, ist im Vorschalt-Satz die Kupplung CL1 eingerückt und die Überholkupplung OWC1 sperrt, während im Simpson-Satz die Kupplung CL2 und die Bremse B3 betätigt sind. Der Kraftfluß im vorderen Bereich bis zum Vorwärtskupplungskörper ist gleich mit der Schaltposition « P ». Über die geschlossene Rückwärtsgang — und Direktgangkupplung CL2 und der mit der Kupplungstrommel fest verbundenen Antriebsglocke werden die verbundenen Sonnenräder S2 und S3 angetrieben. Da über das angelegte Rückwärtsgang-Bremsband B3 die hintere Trommel und damit der Planetenträger C3 des dritten Planetensatzes gehalten wird, dreht das Ringrad R2 und die Abtriebswelle O in umgekehrter Drehrichtung mit der reduzierten Drehzahl der Rückwärtsgangübersetzung von 2,11 : 1.

In der Schaltposition « N » entsprechend « Neutral » erfolgt keine Steuerung. Der Kraftfluß in der Schaltposition « N » ist gleich wie in « P », das heißt es findet kein Abtrieb statt. Hierbei wird die Abtriebswelle allerdings nicht blockiert.

In der Schaltposition « DE », dem Automatikbereich, in dem das Getriebe selbsttätig entsprechend der Drehmomentanforderung und der Fahrgeschwindigkeit zwischen den Gangstufen 1 bis 4 wechselt, ist in den unteren drei Vorwärtsgängen der Vorschalt-Satz durch die Wirkung der Überholkupplung OWC1 gesperrt und im Simpson-Satz sind im 1. Gang die Kupplung CL3 und die Überholkupplung OWC2 betätigt, im 2. Gang die Bremse B2 und die Kupplung CL3 betätigt und im 3. Gang die Kupplung CL2 und die Kupplung CL3 betätigt.

4

Zusätzlich hierzu wird im 3. Gang die Wandler-Überbrückungs-Kupplung LUCL eingerückt. Im 4. Gang ist gleichfalls die Wandler-Überbrückungs-Kupplung LUCL eingerückt und durch die angelegte Bremse B1 wird der Vorschalt-Satz wirksam, das heißt, er ist nicht gesperrt sondern übersetzt im Verhältnis der Verzahnung (z. Zt. 0,75 : 1). Der Simpson-Satz bleibt im gleichen Zustand wie im 3. Gang, d. h. die beiden Kupplungen CL2 und CL3 sind eingerückt.

Im einzelnen verläuft der Kraftfluß in den einzelnen Gängen wie folgt :

« DE » — 1. Gang Zugbetrieb

Der Kraftfluß im vorderen Bereich bis zum Vorwärtskupplungskörper ist gleich mit der Position « P ». Durch Druckbeaufschlagung wird die Vorwärtskupplung CL3 eingerückt und das Ringrad R2 des zweiten Planetensatzes in Motordrehrichtung angetrieben. Vom Ringrad R2 werden die Planetenräder P2 in gleicher Richtung mitgenommen. Dadurch wird das Sonnenrad S2 in umgekehrter Drehrichtung angetrieben. Dieses Sonnenrad S2 treibt über die Planetenräder P3 des dritten Planetensatzes das Ringrad R3 an, welches dadurch wieder in Motordrehrichtung dreht. Der hintere Planetenträger stützt sich dabei an der Überholbremse OWC2 ab.

Die Kombination der in Serie geschalteten Planetensätze ergibt für den 1. Gang eine Übersetzung von 2.474 : 1, wobei auch das Drehmoment gemeinsam vom Planetenträger C2 des zweiten und vom Ringrad R3 des dritten Planetensatzes auf die Abtriebswelle O übertragen wird.

DE — 1. Gang Schubbetrieb

Im Schubbetrieb wird die hintere Überholbremse OWC2 überrollt, so daß kein Durchtrieb zum Wandler besteht und der Motor auf Leerlaufdrehzahl abfallen kann. Auch die vordere Überholkupplung OWC1 würde überrollen, aber dies kommt nicht mehr zum Tragen.

DE — 2. Gang Zugbetrieb

Der Kraftfluß im vorderen Bereich bis zum Ringrad R2 des zweiten Planetensatzes ist gleich mit dem 1. Gang in Schaltposition « DE ». Zusätzlich zur Vorwärtskupplung CL3 wird durch Druckbeaufschlagung der Anlegeseite des Servos des 2. Gangbandes die zweite Bremse B2 angelegt und dadurch die Trommel der Rückwärts- und Direktgangkupplung CL2 und über die damit starr verbundene Antriebsglocke das Sonnenrad S2 des zweiten Planetensatzes abgebremst. Die im Planetenträger gelagerten Planetenräder P2 des zweiten Planetensatzes werden vom Ringrad R2 angetrieben und drehen sich mit dem Planetenträger C2 um das gehaltene Sonnenrad S2, wobei der Planetenträger C2 in starrer Verbindung mit der Abtriebswelle im Übersetzungsverhältnis von 1.47 : 1 dreht.

DE — 2. Gang Schubbetrieb

Im Schubbetrieb treibt die Abtriebswelle O den Planetenträger C2 des zweiten Planetensatzes an, der sich dadurch mit seinen Planetenrädern P2 um das gehaltene Sonnenrad S2 dreht und über das Ringrad R2 und die Vorwärtskupplung CL2 die Mittenwelle antreibt. Der Kraftfluß endet an der vorderen ersten Überholkupplung OWC1, die in Schubrichtung überrollt wird. Dadurch kann die Motordrehzahl auf Leerlauf abfallen.

DE — 3. Gang Zugbetrieb

Der Kraftfluß im vorderen Bereich bis zum Ringrad R2 des zweiten Planetensatzes ist gleich mit dem 1. Gang in Schaltposition « DE ». Der Wechsel vom 2. zum 3. Gang ist dadurch gekennzeichnet, daß durch Druckbeaufschlagung der Löseseite des Servos des 2. Gangbandes die zweite Bremse B2 löst und dafür durch Druckbeaufschlagung die Rückwärts- und Direktgangkupplung CL2 schließt, wodurch dann über die Antriebsglocke die Sonnenräder S2 und S3 angetrieben werden. Da nun vom zweiten Planetensatz Ringrad R2 und Sonnenrad S2 mit Antriebswellendrehzahl angetrieben werden, treibt der Planetenträger C2 die Abtriebswelle O mit der gleichen Drehzahl.

Zusätzlich wird nach der 2-3 Schaltung auch die Wandlerüberbrückungskupplung LUCL angelegt, so daß der Wandler ohne Schlupf arbeitet. Dadurch wird im 3. Gang eine echte 1 : 1 Übersetzung erreicht.

DE — 3. Gang Schubbetrieb

Ebenso wie im 2. Gang in Position « DE » wird die vordere Überholkupplung OWC1 überrollt und der Motor kann auf Leerlaufdrehzahl abfallen.

DE — 4. Gang Zugbetrieb

Der Kraftfluß im hinteren Bereich ab der Mittenwelle M ist gleich wie im 3. Gang in Position « DE ».

Zusätzlich wird durch Druckbeaufschlagung der Anlegeseite des Servos der ersten Bremse B1, die erste Bremse B1 betätigt, wodurch über die Bremstrommel und deren Verbindung zum Sonnenrad S1 dieses festgehalten wird. Wie eingangs schon beschrieben, dreht sich dadurch die Mittenwelle als Abtrieb in starrer Verbindung mit dem Ringrad R1 im Übersetzungsverhältnis von 0.75 : 1.

## DE — 4. Gang Schubbetrieb

Im Gegensatz zu den Gängen 1, 2 und 3 in Position « DE » wird die erste Überholkupplung OWC1 nicht überrollt, da das Sonnenrad S1 auch im Schub festgehalten wird und somit der Planetenträger C1 von der Mittenwelle M angetrieben wird. Dadurch dreht der Motor immer mit der Drehzahl, die der Fahrzeuggeschwindigkeit in Verbindung mit der Antriebsstrang-Übersetzung entspricht. Es findet die sogenannte Motorbremsung statt.

In der Schaltposition « D », dem Automatikbereich, in dem nur zwischen den Gangstufen 1 bis 3 geschaltet wird, sind wieder die im vorhergegangenen erläuterten Kupplungen und Bremsen betätigt, wobei sich durch die im Schiebebetrieb lösende Überholkupplung OWC1 im Vorschalt-Satz eine erwünschte Freilaufwirkung ergibt. Mit der Position « D » wurde die Möglichkeit geschaffen, ohne KD-Betätigung die Fahrzeughöchstgeschwindigkeit zu erreichen.

In der Schaltposition « 2 » ist der Kraftfluß und das Übersetzungsverhältnis im Zugbetrieb gleich wie in Position DE — 2. Gang beschrieben. Im Gegensatz zu den Positionen « DE » und « D » fährt das Fahrzeug direkt im 2. Gang an und schaltet nicht hoch. Dies ist vorteilhaft beim Anfahren auf weichem, sandigem oder glattem Untergrund und bei Talfahrten. Die Motorbremsung wird durch das Anlegen der ersten Kupplung CL1 erreicht. Beim Anwählen der Schaltposition « 2 » bei hohen Geschwindigkeiten schaltet das Getriebe geschwindigkeitsabhängig in den 2. Gang.

In der Schaltposition « 1 » ist der Kraftfluß und das Übersetzungsverhältnis im Zugbetrieb gleich wie in Position DE — 1. Gang beschrieben. Zusätzlich wird über das hintere Bremsband B3 die Rückwärtsgangtrommel gehalten. Da auch in dieser Position die erste Kupplung CL1 beaufschlagt wird, findet eine Motorbremsung statt. Beim Anwählen der Schaltposition « 1 » bei hohen Geschwindigkeiten schaltet das Getriebe geschwindigkeitsabhängig in den 1. Gang. Ein Hochschalten aus dem 1. Gang findet nicht statt.

Damit eignet sich diese Schaltposition besonders für Talfahrten mit großer Last oder steilem Gefälle.

Aus den Fig. 3 A, B, C und D ist die Gesamtanordnung des hydraulischen Steuerventilsystems zu ersehen, das die Funktionen des Anlegens und Lösens der Kupplungen und Bremsen Wechselgetriebes nach Fig. 1 in der in Zusammenhang mit Fig. 2 erläuterten Aufeinanderfolge steuert. In den Fig. 3 A, B, C und D sind hierbei die Bezugszeichen von aus der zum Stand der Technik in der Beschreibungseinleitung erwähnten früheren Anmeldung DE-OS 2 227 555 bekannten Ventilen übernommen und in Klammern gesetzt worden.

Das Handwählventil, das von Hand aus in eine von sieben Schaltpositionen gebracht werden kann, die durch die Symbole P, R, N, DE, D, 2 und 1 gekennzeichnet sind, ist in Fig. 3 D mit dem Bezugszeichen (300) versehen.

Über die Steuerbünde des Handwählventiles (300) werden entsprechend der gewählten Schaltposition unterschiedliche Leitungen mit Druck beaufschlagt, wobei durch die eingefügten Buchstaben- und Zahlenkombinationen angegeben ist, in welcher Schaltposition die entsprechende Leitung Druck führt bzw. welchen Druck sie führt. Führt ein und dieselbe Leitung in unterschiedlichen Schaltpositionen oder Betriebsbereichen unterschiedliche Drücke, so sind diese jeweils durch einen Schrägstrich voneinander getrennt angegeben. Zur Bezeichnung der jeweiligen Leitung werden die entsprechenden Druckbezeichnungen in Klammern gesetzt.

Obwohl im hydraulischen Steuerventilsystem eigentlich nur drei unterschiedliche Drücke, der Leitungsdruck « LINE », der Drehmomentanforderungs- oder Drosseldruck « TV » und der Fahrgeschwindigkeits- oder Fliehkraftreglerdruck « GOV » vorliegen, wird jedem dieser Drücke eine neue Bezeichnung zugeteilt, sobald er von einem entsprechenden Ventil freigegeben oder gesperrt oder aber verändert oder moduliert werden kann.

Das für die Funktion des hydraulischen Steuerventilsystems erforderliche Druckmittel wird hierbei in bekannter Weise von einer Pumpe zur Verfügung gestellt, die den sogenannten System- oder Leitungsdruck LINE erzeugt, sobald der Verbrennungsmotor des Kraftfahrzeuges läuft.

Die Höhe des Leitungsdruckes LINE wird hierbei über ein Öldruck-Regulierventil (202) und über ein Öldruck-Verstärkungsventil (214) in Abhängigkeit von Drucksignalen gesteuert, die die Höhe der Drehmomentanforderung bzw. der Fahrgeschwindigkeit aufzeigen oder wird durch die Schaltposition « R » bestimmt.

Das Getriebe ist hierzu in bekannter Weise mit einem die Drehmomentanforderung erfassenden Drosseldruckventil (230) versehen, das aus dem Leitungsdruck ein der Drehmomentanforderung proportionales Drucksignal, auch Drosseldruck TV genannt, erzeugt, das für die Beeinflussung von verschiedenen Schaltventilen erforderlich ist.

Das Getriebe weist weiterhin in bekannter Weise ein die Fahrgeschwindigkeit erfassendes Fliehkraft-treglerventil (144) auf, das aus dem Leitungsdruck ein der Fahrzeuggeschwindigkeit proportionales Drucksignal, auch Fliehkraftreglerdruck GOV genannt, erzeugt, das gleichfalls auf die verschiedenen Schaltventile einwirkt, um die selbsttätigen Schaltvorgänge zu bewirken.

Das hydraulische Steuerventilsystem weist in bekannter Weise eine Anzahl von Schaltventilen auf, die in Abhängigkeit vom einwirkenden Leitungsdruck LINE, von entsprechenden Federkräften, dem Drosseldruck TV und dem Fliehkraftreglerdruck GOV das Anlegen und Lösen der entsprechenden Kupplungen und Bremsen einleiten.

So ist ein 1-2 Schaltventil (428) ein 2-3 Schaltventil 450 = etwa (446) und ein 3-4 Schaltventil 550 = etwa (334) vorgesehen, die in bekannter Weise die Hochschaltungen steuern.

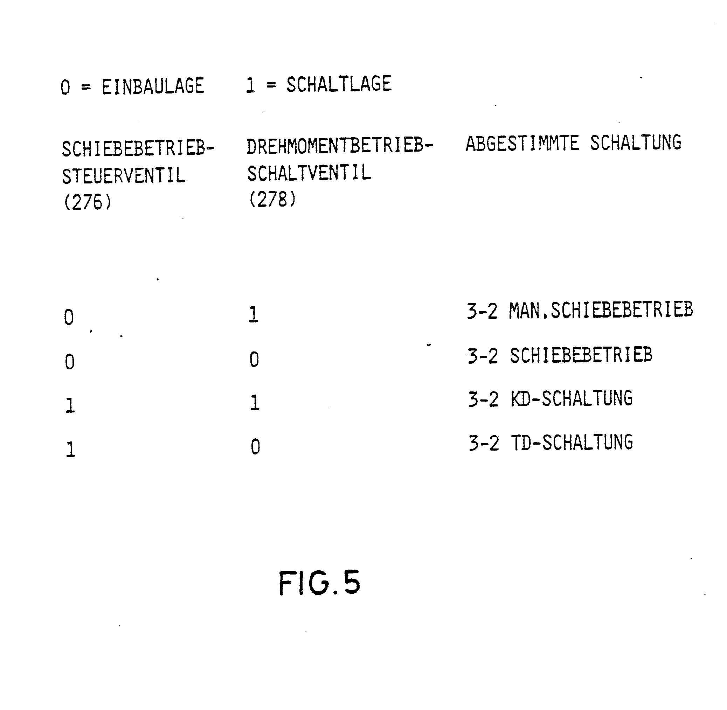

Weiterhin sind entsprechende 3-2 Komfort-Steuerventile für unterschiedliche Betriebsbereiche, so für den Schiebebetrieb (276) oder für den Drehmomentbetrieb (278) vorgesehen (siehe Fig. 5).

Darüberhinaus ist ein Schiebebetrieb-Verstärkungsventil (266) zur Erhöhung des Leitungsdruckes im Schiebebetrieb angeordnet. Akkumulatorventile (166 und 570) sind angeordnet, um die Druckmittelabfuhr von der Löseseite der Servos für B2 und B1 zu steuern und um ein entsprechend abgedämpftes Anlegen der Bremsbänder zu erreichen.

Weiterhin ist ein Drehmomentanforderungsventil oder auch Kick-down-Ventil (314) vorgesehen, das in Abhängigkeit von einer maximalen Betätigung des Gaspedales und der jeweiligen Geschwindigkeit eine Zwangsrückschaltung vom eingelegten Gang in einen der niedrigeren Gänge bewirkt bzw. eine Hochschaltung verzögert oder verhindert.

Da der Einfluß des Drosseldruckes TV bei hohen Fahrgeschwindigkeiten noch zu einer weiteren Erhöhung des Leitungsdruckes LINE führen würde, ist ein Abschaltventil (226) vorgesehen, das vom Fahrgeschwindigkeitsdruck GOV beeinflußt wird.

Im nachfolgenden werden nunmehr die gemäß der Erfindung neuen Ventilanordnungen bzw. gemäß der Erfindung modifizierten Ventilanordnungen erläutert, die in der Zeichnung durch ein hinterlegtes Raster hervorgehoben sind.

Die gewünschte Drehmomentwandler-Überbrückungssteuerung während eines Betriebes im 3. und 4. Gang wird über ein Drehmomentwandler-Überbrückungskupplung-Steuerventil 500 und ein mit diesem zusammenwirkenden Überbrückungskupplung-Schaltventil 520 erreicht. Das Steuerventil 500 besteht im wesentlichen aus einem durch eine Feder 502 belasteten Ventilkörper 504, der im wesentlichen drei Steuerbünde 506, 508 und 510 aufweist, die so angeordnet sind, daß in der in Fig. 3 gezeigten Stellung, in der die Wandlerkupplung LUCL geöffnet ist, der Wandlerzulaufdruck CC dem Wandler über die Leitung (CC/EX) vor dem Überbrückungskupplungskolben zugeleitet wird und über die offene Überbrückungs-kupplung in den Wandler-Trilock-Bereich gelangt und von da als Wandlerrücklauf CDC über die Leitung (CDC/LUC) und das Steuerventil 500 über die Leitung (COOLER) fließt.

In der zweiten, hochgeschalteten Stellung, in der die Wandlerkupplung LUCL geschlossen ist, fließt Leitungsdruck LINE als Überbrückungskupplungsdruck LUC über die Leitung (CDC/LUC) in den Wandler-Trilock-Bereich während der Raum vor dem Überbrückungskupplungskolben als Wandlerrück-klauf EX über die Leitung (CC/EC) zum Ölsumpf abgeleitet wird. Der Wandlerzulaufdruck CC aus der Leitung (CC/COOLER) fließt über die Leitung (COOLER) unmittelbar zum Kühler.

Das Steuerventil 500, insbesondere dessen Feder 502, ist hierbei so ausgelegt, daß es auch in Abhängigkeit von der Höhe des Leitungsdruckes wirksam werden kann, und zwar der Art, daß immer wenn im Fahrbetrieb im 3. und 4. Gang und eingerückter Wandlerüberbrückungskupplung das Gaspedal losgelassen wird, die Wandlerüberbrückungskupplung ausgerückt wird, da beim Loslassen des Gaspeda-les das Drosseldrucksignal stark abfällt und damit der Leitungsdruck auf einen Wert verringert wird, der der Feder 502 ein nach unten schalten des Ventilkörpers 504 ermöglicht. Somit wird im sogenannten Schiebebetrieb des Kraftfahrzeuges ein Hochdrehen der Antriebsmaschine verhindert.

Das Steuerventil 500 wird hierbei im Normalbetrieb geschwindigkeitsabhängig über ein Überbrückungskupplungs-Schaltventil 520 angesteuert, das aus einem Ventilkörper 522 besteht, der vier Steuerbünde 523, 524, 525 und 526 aufweist und über eine Feder 527 in Einbaulage gehalten ist. Auf das untere Ende des Ventilkörpers 522 wirkt hierbei der Fliehkraftreglerdruck GOV ein, am Steuerbund 525 wirken ein Steuerdruck TDC/KD/2/1/R-I ein und an seinem oberen Ende wirkt ein Modulatorventil 530 ein, das aus einem Ventilkörper 531 mit einem Steuerbund 532 und einer Feder (533) besteht und das einerseits vom Drosseldruck TV/TVB und Steuerdrücken KD/2/1/R-I und MOD/KD/2/1/R-I beaufschlagt ist.

Befindet sich der Ventilkörper 522 des Drehmomentwandler-Überbrückungskupplung-Schaltventiles 520 in der in Fig. 3 gezeigten Stellung, so wird Leitungsdruck LINE über den Zwischenraum zwischen den Steuerbünden 528 und 526 als Überbrückungskupplungsdruck LUC zum Drehmomentwandler-Überbrückungskupplung-Steuerventil 500 geführt und verstärkt hier die Kraft der Feder 502, die den Ventilkörper 504 entgegen den am unteren Ende einwirkenden Leitungsdruck LINE nach unten hält und hierdurch die Drehmomentwandler-Überbrückungskupplung ausgerückt hält. Sobald bei zunehmender Fahrgeschwindigkeit der Fliehkraftreglerdruck GOV zunimmt und die diesem entgegenwirkenden Steuerdrücke TDC/KD/2/1/R-I überwunden werden, wird der Ventilkörper 522 hochgeschaltet und der Leitungsdruck LINE abgesperrt. Dadurch wirkt am oberen Ende des Drehmomentwandler-Überbrückungskupplung-Steuerventiles nurmehr die Kraft der Feder 502 auf den Ventilkörper 504 ein, was bei ausreichend hohem Leitungsdruck LINE, im Normalbetrieb stets zum Hochschalten des Ventilkörpers 504 führt, wodurch die Drehmomentwandler-Überbrückungskupplung eingerückt wird. Lediglich bei losgelassenem Gaspedal ist, wie bereits erläutert, der Leitungsdruck nicht hoch genug, um eine Hochschalten des Ventilkörpers 504 entgegen der Kraft der Feder 502 zu bewirken.

Der Überbrückungskupplungsdruck LUC des Schaltventiles 520 wirkt hierbei über ein Kugelwechselventil 530 auf das Steuerventil 500.

Wahlweise kann zu der gleichen Stelle auch ein Überbrückungskupplungs-Verhinderungsdruck LU/INH geführt werden, der von einem Überbrückungskupplung-Verhinderungsventil 540 bereitgestellt wird, das durch einen Solenoid 542 elektrisch- oder mikroprozessor-gesteuert betätigbar ist.

Damit kann in Abhgängikeit von weiteren Betriebsbedingungen ein Einrücken der Drehmomentwandler-Überbrückungskupplung verhindert werden bzw. die eingerückte Kupplung geöffnet werden.

In der Ventilbohrung des Überbrückungskupplung-Schaltventiles 520 ist ein 3-2 Drehmomentbetrieb-Schaltventil 740 angeordnet. Das 3-2 Drehmomentbetrieb-Schaltventil 740 besteht aus einer in der Ventilbohrung angeordneten Ventilhülse 742, in der ein Ventilkörper 744 angeordnet ist, der über eine Ventilfeder 745 nach oben gedrückt wird. Der Ventilkörper 744 weist vier Steuerbünden 746, 747, 748 und 749 auf.

Das 3-2 Drehmomentbetrieb-Schaltventil 740 ermöglicht bei einer Drehmomentanforderung unterhalb des Kick-down-Bereiches eine 3-2 Schaltung, um z. B. die erforderliche Beschleunigung für einen Überholvorgang bereitzustellen.

Das für eine 3-4 Aufwärtsschaltung erforderliche 3-4 Schaltventil 550 besteht aus einem Ventilkörper 551 mit drei Steuerbünden 552, 553 und 554 und eine Ventilfeder 555 und ist hierbei gegenüber einem üblichen Schaltventil dieser Art (334) insofern unterschiedlich als sich über eine hydraulische Zwangsblockierung des Schaltventiles bei sich in der Stellung D befindlichem Handwählventil das Hochschalten in den 4. Gang verhindern läßt. Der einwirkende Kontrolldruck 3 wirkt hierbei über die Leitung (KD/3/2/1/R) ein. Ein auf das 3-4 Schaltventil 550 einwirkendes Modulatorventil 556 bewirkt hierbei in Abhängigkeit von dem einwirkenden Drosseldruck TV/TVB, zwei Federn und dem am unteren Ende des 3-4 Schaltventiles 550 einwirkenden Fliehkraftreglerdrucks GOV ein selbsttätiges Hochschalten in den 4. Gang, sofern sich das Handwählventil in der Stellung DE befindet.

Um bei einer Fehlbetätigung des Handwählventiles bei hohen Fahrgeschwindigkeiten ein gefährliches Einrücken des Rückwärtsganges zu verhindern ist ein Rückwärtsgang-Verhinderungsventil 580 vorgesehen, das oberhalb einer definierten Geschwindigkeit von z. B. 16 km/h, bei Einlegen der Schaltposition « R » am Handwählventil ein Lösen bzw. Beaufschlagen der für den der Rückwärtsgang erforderlichen Schaltelemente, der zweiten Kupplung CL2, der ersten Kupplung CL1 und der dritten Bremse B3, verhindert. Das Rückwärtsgang-Verhinderungsventil 580 weist hierzu einen Ventilkörper 582 auf, der entgegen dem Druck einer Feder 584 über den an seinem einen Ende einwirkenden Fliehkraftreglerdruck GOV bei hohen Fahrgeschwindigkeiten solange in seiner Sperrstellung gehalten wird, bis die definierte Geschwindigkeit unterschritten ist und das Einlegen des Ganges vollzogen werden kann.

Da für die Schaltposition « 1 » am Handwählventil (300) auch das Einrücken der dritten Bremse B3 erforderlich ist, wird bei Anwählen der Schaltposition « 1 » durch das Handschaltventil (300) zwangsweise das Rückwärtsgangverhinderungsventil 580 unwirksam gemacht.

In ähnlicher Weise kann bei einem Einlegen des Handwählventiles (300) in die Schaltposition « 2 » bzw. « 1 » bei zu hoher Fahrgeschwindigkeit zunächst das Einschalten des gewählten Ganges verhindert werden, bis die Fahrgeschwindigkeit unter einen bestimmten Wert abgesunken ist, der ein gefahrloses Durchführen der gewünschten Schaltung ermöglicht.

Ein im wesentlichen einem üblichen 2-3 Schaltventil (446) entsprechendes 2-3 Schaltventil 450 in modifizierte Ausführung weist einen Ventilkörper 451 mit fünf Steuerbünden 452, 453, 454, 455 und 456 auf, wobei am Steuerbund 455 der Druck 2/1/R-I sowie am Steuerbund 456 der Druck MOD/KD/2/1/R-I angreifen, während andererseits am Steuerbund 452 der Fliehkraftreglerdruck (GOV) angreift, um bei einem Einlegen des Handwählventiles in die Schaltposition « 2 » bei zu hoher Fahrgeschwindigkeit das Betätigen der entsprechenden Schaltelemente solange zu verhindern, bis die Geschwindigkeit des Fahrzeuges unter einen vorbestimmten Wert, z. B. 118 km/h abgesunken ist und das Einlegen des 2. Ganges erfolgen kann.

Ein an sich bekanntes D2 Schaltventil (429) wirkt mit einem an sich bekannten 1-2 Schaltventil (428) zusammen. Das D2 Schaltventil (429) weist einen Ventilkörper (430) mit sechs Steuerbünden (431 bis 436) auf, wobei am Steuerbund (431) der Druck MOD/KD/2/1/R-I angreift, am Steuerbund (432) der Druck 1/R-I und am Steuerbund (434) der Druck D/3/2/1 angreift, während auf der anderen Seite am Steuerbund (431) der Fliehkraftreglerdruck GOV angreift, so daß bei einem Einlegen des Handwählventiles in die Schaltposition « 1 » bei zu hoher Fahrgeschwindigkeit zunächst die Schaltelemente zum Einlegen des 2. Ganges betätigt und erst nachdem die Fahrgeschwindigkeit des Fahrzeuges unter einen bestimmten Wert, z. B. 60 km/h abgesunken ist, die gewünschte Schaltung in den 1. Gang erfolgt.

Für die Abstimmung der sehr wichtigen 3-2 Lastwechselrückschaltung wurde ein neues Ventilkonzept entwickelt, das genenüber den früheren vier Betriebsbereichen zur besseren Kalibrierung auf acht Betriebsbereiche erweitert wurde, wobei prinzipiell das Konzept der Drosselung des Ausrückvorganges der zweiten Kupplung CL2 und des Anlegevorganges der zweiten Bremse B2 beibehalten wurde.

Bei der bekannten Ventilanordnung gemäß der DE-OS 2 227 555 der Anmelderin wirkt ein normales 2-3 Schaltventil (446) mit zwei 3-2 Komfortsteuerventilen zusammen, einem 3-2 Schiebebetrieb-Steuerventil (276) und einem 3-2 Drehmomentbetrieb-Steuerventil (278).

Diese bekannte Ventilanordnung ermöglichte gemäß der in Figur 5 gezeigten Schaltlogik abgestimmte 3-2 Schaltungen in vier Betriebsbereichen und zwar bei einer über das Handwählventil eingeleiteten manuellen Schaltung im Schiebebetrieb, bei einer selbsttätigen Schaltung im Schiebebetrieb, bei einer durch eine Kick-Down-Betätigung erzwungenen Schaltung und einer durch eine gemäßigte Drehmomentanforderung veranlaßten Schaltung.

Demgegenüber wirkt bei der erfindungsgemäßen Ventilanordnung ein normales 2-3 Schaltventil (446) zusätzlich zu einem 3-2 Schiebebetrieb-Steuerventil 600, das in etwa dem bekannten Ventil (276) entspricht und einem 3-2 Kick-Down-Schaltventil 640, das etwa dem bekannten Ventil (278) entspricht noch mit drei weiteren 3-2 Komfort-Steuerventilen zusammen. Diese zusätzlichen 3-2 Komfort-Steuerventile sind ein 3-2 Drehmomentbetrieb-Steuerventil 620 sowie ein 3-2 Kick-Down-Steuerventil für den 2. Gang-Servo B2 660 und ein 3-2 Kick-Down-Steuerventil für die 3. Gang-Kupplung CL2 680.

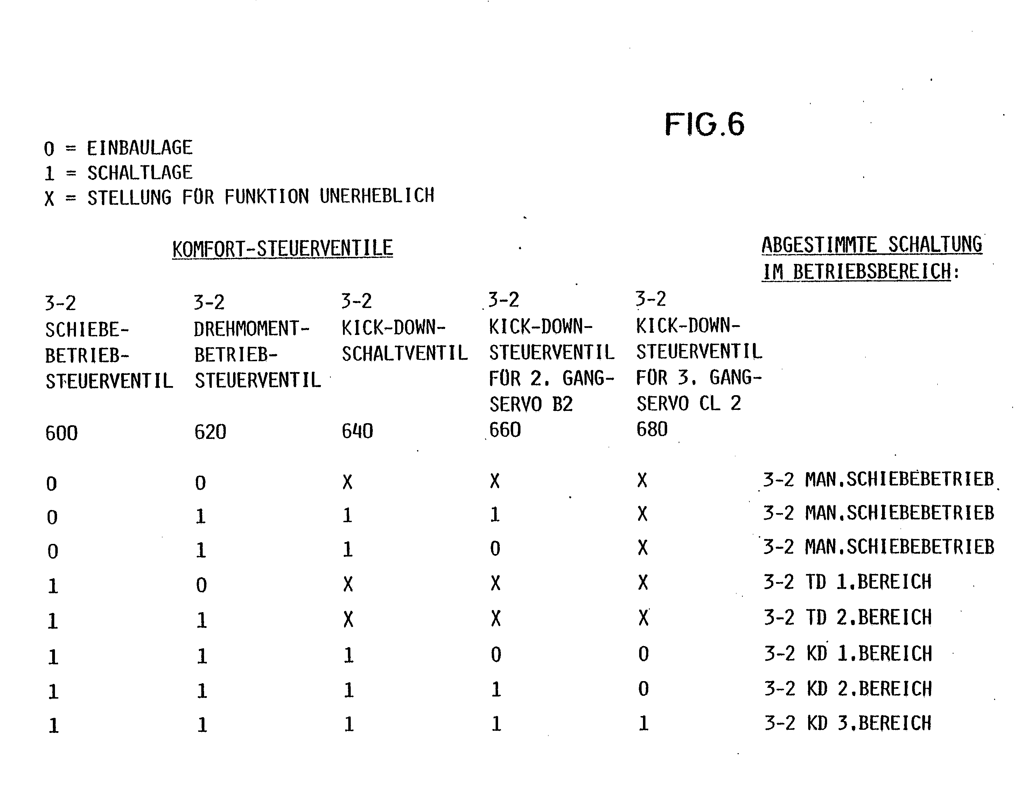

Durch die gemäß der Schaltlogik in Figur 6 erfolgende Betätigung der erfindungsgemäßen Ventilanordnung werden abgestimmte 3-2 Abwärtsschaltungen für acht unterschiedliche Betriebsbereiche erreicht.

Eine 3-2 Rückschaltung ist dadurch gekennzeichnet, daß die Rückwärtsgang- und Direktgangkupplung CL2 gelöst und das Bremsband für den 2. Gang B2 angelegt wird.

Die Beeinflussung des Rückschaltkomforts beruht im wesentlichen darauf, daß das verdrängte Öl aus der öffnenden Kupplung CL2 und von der Löseseite des anlegenden Kolbens des Servos der Bremse B2 über verschiedene Ventile und durch unterschiedlich große Drosselöffnungen unterschiedlich schnell abfließen kann. Die 3-2 Rückschaltung läßt sich in drei generelle Bereiche einteilen :

## DE-3-2 Rückschaltung im Schubbetrieb

Bei Schubbetrieb bleibt das 3-2 Schiebebetrieb-Steuerventil 600 in seiner in Fig. 3 gezeichneten Einbaulage. Dadurch kann der Abflußdruck des 2. Gang Servos ISR ACC über den Kanal (ISR ACC EX) über die Drosselstelle LTV abfließen. Der Abflußdruck der Kupplung CL2 HC REL kann über den Kanal (HC REL EX) unkalibriert abfließen.

## DE-3-2-Rückschaltung bei Drehmomentanforderungsbetrieb TD

Bei Drehmomentanforderungsbetrieb ist der auf das untere Ende des 3-2 Schiebebetrieb-Steuerventil 600 einwirkende Drosseldruck TV so hoch, daß es den Ventilkörper entgegen der Kraft der Feder hochschaltet. Dadurch fließen bei niedriger Geschwindigkeit der Abflußdruck des 2. Gang Servos ISR ACC und der Abflußdruck der Kupplung CL2 HC REL zusammen und werden je nach der anliegenden Fahrgeschwindigkeit, die über den Reglerdruck GOV auf das untere Ende des 3-2 Drehmomentbetrieb-Steuerventils 620 einwirkt, entweder über die Drosselstelle TD1 oder die Drosselstelle TD2 abgeleitet. Bei höheren Fahrgeschwindigkeiten schaltet der auf das untere Ende des 3-2 Kick-down Schaltventil 640 einwirkende Reglerdruck GOV dieses Ventil um, wodurch der Abflußdruck der Kupplung CL2 HC REL und der Abflußdruck des 2. Gang Servos ISR ACC wieder separiert werden. Der Abflußdruck der Kupplung CL2 HC REL wird dann über das 3-2 CL2 Kick-down Steuerventil 680 je nach Fahrgeschwindigkeit über Drosselstellen HC KD1 oder HC KD2 abgeführt während der Abflußdruck des 2. Gang Servos ISR ACC über Drosselstellen ISR KD1 oder ISR KD2 abfließen kann.

## DE-3-2 Rückschaltung bei Kick-down Betrieb

Hierbei sind bei höherer Fahrgeschwindigkeit das 3-2 Schiebebetrieb-Steuerventil 600, das 3-2 Drehmomentbetrieb-Steuerventil 620 und das 3-2 Kick-down Schaltventil 640 hochgeschaltet.

Das 3-2 CL2 Kick-down Steuerventil 680 und das 3-2 B2 Kick-down Steuerventil 660 schalten ebenfalls fahrgeschwindigkeitsabhängig und leiten dadurch den Abflußdruck der Kupplung CL2 HC REL über Drosselstellen HC KD1 bzw. HC KD2 bzw. den Abflußdruck des 2. Gang Servos ISR ACC über Drosselstellen ISR KD1 bzw. ISR KD2 ab.

Die beiden 3-2 Kick-down Steuerventile, das für den 2. Gang Servo B2 660 und das für die 3. Gang-Kupplung CL2 680 sorgen dafür, daß je nach vorliegendem Betriebsbereich, d. h., je nach vorliegender Fahrgeschwindigkeit bei einer durch eine Kick-Down-Betätigung erzwungenen 3-2 Abwärtsschaltung ein unterschiedlich abgestimmtes Lösen der zweiten Kupplung CL2 bzw. Anlegen der zweiten Bremse B2 erzielt wird, in dem unterschiedliche Drosselstellen ISR KD1, ISR KD2 und HC KD1 und HC KD2 angesteuert werden. Diese Drosselstellen bestimmen den Abfluß von Druckmittel aus der den 3. Gang bestimmenden zweiten Kupplung CL2 bzw. aus der Löseseite des 2. Gang-Servo B2 und damit die Geschwindigkeit des Anlegens des den 2. Gang bestimmenden Bremsbandes der zweiten Bremse B2.

Das 3-2 Drehmomentbetrieb-Schaltventil 740 sorgt hierbei für eine Erweiterung des Betriebsbereiches, innerhalb dessen durch eine zügige, aber gemäßigte Betätigung des Gaspedales und die hierdurch ausgedrückte Drehmomentanforderung eine Abwärtsschaltung vom 3. Gang zum 2. Gang erfolgt, wobei das 3-2 Drehmomentbetrieb-Steuerventil 620 je nach Höhe des an seinem unteren Ende einwirkenden, fahrgeschwindigkeitsabhängigen Fliehkraftreglerdruck GOV unterschiedliche Drosselstellen TD1 bzw. TD2 ansteuert, die für ein abgestimmtes Lösen der den 3. Gang bestimmten zweiten Kupplung CL2 und Anlegen des Bremsbandes für die zweite Bremse B2 über den entsprechenden Servo sorgt.

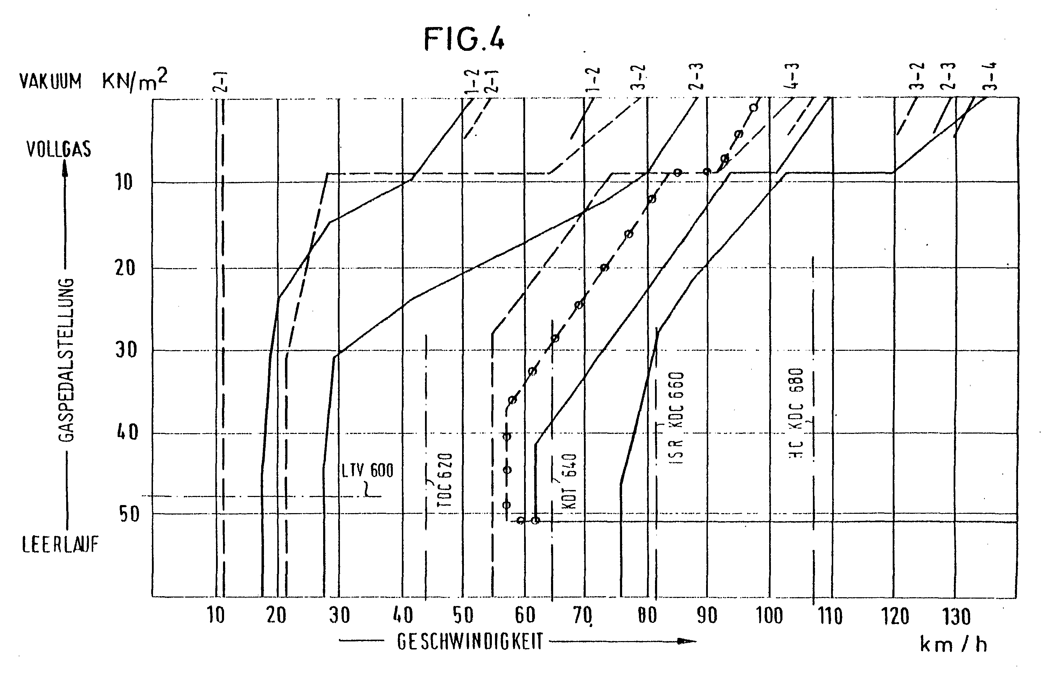

Die Schaltcharakteristik des erfindungsgemäßen hydraulischen Steuerventilsystems kann in übersichtlicher Weise aus dem in Fig. 4 gezeigten Schaltdiagramm entnommen werden, in dem auf der Abszisse die Fahrgeschwindigkeit und auf der Ordinate die Gaspedalstellung angegeben ist und wo die jeweiligen Hochschaltungen in vollen Linien und die entsprechenden Rückschaltungen in gestrichelten Linien eingezeichnet sind.

Betrachten wir z. B. eine Gaspedalstellung bei der ein Unterdruck von 30 KN/m$^2$ auftritt. Wir wandern hierzu auf der horizontalen Linie bei 30 nach rechts und können feststellen, daß ein Hochschalten vom 1. in den 2. Gang etwas unterhalb von 20 km/h pro erfolgt, die nächste Hochschaltung vom 2. in den 3. Gang erfolgt bei etwas oberhalb von 30 km/h, daraufhin wird bei etwa über 70 km/h die Wandlerüberbrückungskupplung eingerückt und erst bei oberhalb von 80 km/h ein Hochschalten in den 4. Gang bewirkt.

Wandern wir auf der gleichen horizontalen Linie wieder nach links, so können wir feststellen, daß an der mit Kreisen gekennzeichneten gestrichelten Linie zunächst ein Ausrücken der Wandlerüberbrückungskupplung bei etwa 64 km/h erfolgt und hierauf bei etwa 55 km/h die Rückschaltung vom 4. Gang in den 3. Gang vorgenommen wird. Die darauffolgende Rückschaltung vom 3. Gang in den 2. Gang erfolgt bei etwa 22 km/h und die darauffolgende Rückschaltung vom 2. Gang in den 1. Gang erfolgt stets bei etwa 12 km/h.

Aus einem Vergleich der verschiedenen horizontalen Linien und der von diesen geschnittenen Hochschalt- bzw. Rückschaltlinien läßt leicht erkennen, daß bei stärkerer Drehmomentanforderung, d. h. stärker niedergedrücktem Gaspedal und damit absinkendem Vakuum die entsprechenden Hochschaltungen stark zu höheren Fahrgeschwindigkeiten hin verlagert werden.

Die an der oberen Kante des Diagramms in kurzen gestrichelten und vollen Linien gezeigten Schaltlinien betreffen die sogenannten Kick-down Hoch- bzw. Rückschaltungen, die nur eingeleitet werden, wenn durch vollständiges Niederdrücken des Gaspedals das sogenannte Kick-down-Ventil betätigt wird.

Durch an der Ordinate bzw. der Abszisse in Strich-Punkt-Linien angedeutete Bereiche mit den Bezeichnungen LTVC 600 ; TDC 620 ; KDT 640 ; ISR KDC und HC KDC 680 sind die Geschwindigkeitsbereiche aufgezeigt, in denen die unterschiedlichen Komfortventile wirksam sind.

Besonderen Wert wurde auch auf die sehr wichtige 3-2 Rückschaltung gelegt, die, wie aus dem Diagramm zu ersehen ist, im Bereich zwischen etwa 45 und 65 km/h durch eine Drehmomentanforderung bewirkt werden kann, die jedoch nicht der Vollgas- bzw. Kick-down-Stellung des Gaspedales entspricht. In ähnlicher Weise ist auch eine 4-3 Rückschaltung bei Drehmomentanforderung unterhalb der Kick-down-Anforderung möglich.

Die erfindungsgemäß vorgenommene Erweiterung des hydraulischen Steuerventilsystems in Verbindung mit den Verbesserungen der bekannten Ventilfunktionen ermöglicht einerseits eine agilere Schaltcharakteristik bei Drehmomentanforderung durch den Fahrer und andererseits einen höheren Komfort infolge der entsprechend den jeweiligen Betriebsbereichen unterschiedlich abgestimmten Abwärtsschaltungen.

**Patentansprüche**

1. Hydraulisches Steuerventilsystem für ein mehrgängiges, selbsttätig schaltendes hydrokinetisch-mechanisches Wechselgetriebe für Kraftfahrzeuge, mit einem Drehmomentwandler mit einer Überbrückungskupplung und einem Wechselgetriebe mit drei Planetenradsätzen, von denen ein einfacher, erster Satz als Vorschaltsatz in einem ersten Teil und die beiden anderen Sätze nach Art eines Simpson-Satzes geschaltet in einem zweiten Teil eines Getriebegehäuses angeordnet sind und der Wandler eine Antriebswelle (C) antreibt, die mit dem Planetenträger (P1) des ersten Satzes treibend verbunden ist, dem eine erste Kupplung (CL1) zum Verbinden des Planetenträgers (P1) mit dem Sonnenrad (S1) zugeordnet ist, dem wieder eine Bremstrommel und eine erste Bremse (B1) zum Festlegen zugeordnet sind und dessen Ringrad (R1) einen Abtrieb bildet, der mit einer Mittenwelle (M) treibend verbunden ist und wobei zwischen dem Planetenträger (P1) und der Mittenwelle (M) eine im Drehmomentbetrieb der Gänge 1 bis 3 und R aber nicht im 4. Gang sperrende Überholkupplung (OWC1) eingeschaltet ist und die Mittenwelle M die Antriebswelle für den Simpson-Satz bildet und über eine zweite Kupplung (CL2) mit den verbundenen Sonnenrädern (S2 und S3) bzw. über eine dritte Kupplung (CL3) mit dem Ringrad (R2) verbindbar ist, wobei der zweiten Kupplung (CL2) eine Bremstrommel und eine zweite Bremse B2 zum Festlegen der beiden Sonnenräder zugeordnet sind, der Planetenträger (C2) des zweiten Satzes und das Ringrad (R3) des dritten Satzes mit der Abtriebswelle (O) treibend verbunden sind und dem Planetenträger (P3) des dritten Satzes eine Überholbremse (OWC2) zum Festlegen am Gehäuse in einer Bremsrichtung bzw. eine Bremstrommel mit einer dritten Bremse (B3) zum Festlegen in beiden Drehrichtungen zugeordnet sind und wobei die Kupplungen und Bremsen über hydraulisch betätigte Kolben bzw. Servos in Abhängigkeit von den Stellungen eines Handwählventiles und/oder von Betriebszuständen des Kraftfahrzeuges selbsttätig schaltbar sind, wobei ein 1. Gang durch Einrücken der dritten Kupplung (CL3), ein 2. Gang durch zusätzliches Anlegen der zweiten Bremse (B2), ein 3. Gang durch Einrücken der zweiten Kupplung (CL2) und Lösen der zweiten Bremse (B2) geschaltet wird und ein als Schongang ausgelegter 4. Gang durch Anlegen der ersten Bremse (B1) bei eingerückt bleibenden zweiten und dritten Kupplungen (CL2 und CL3) geschaltet wird und ein Rückwärtsgang bei eingerückter erster Kupplung (CL1), eingerückter zweiter Kupplung (CL2) und angelegter dritter Bremse (B3) geschaltet wird und im 3. und 4. Gang zusätzlich eine Drehmomentwandler-Überbrückungskupplung (LUCL) eingerückt wird, wobei von einer Druckmittelpumpe über ein Öldruckregulierventil (202) und ein Öldruckverstärkungsventil (214) in Abhängigkeit von einem der Drehmomentanforderung entsprechenden Drucksignale liefernden Drosseldruckventil (230) und von einem der Fahrgeschwindigkeit entsprechenden Drucksignale liefernden Fliehkraftreglerventil (144) ein Leitungsdruck (LINE) erstellt wird, der über ein Handwählventil (300) einer Vielzahl von Schalt- und Steuerventilen zugeleitet wird, die darüberhinaus von den Drucksignalen des Drosseldruckventiles (230) und des Fliehkraftreglerventiles (144) beeinflußt sind, um die selbsttätigen Schaltungen zu bewirken, wobei ein Überbrückungskupplung-Steuerventil (500) und ein mit diesem zusammenwirkendes Überbrückungskupplung-Schaltventil (520) vorgesehen sind, das Steuerventil (500) aus einem durch eine Feder (502) belasteten Ventilkörper (504) besteht, der drei Steuerbünde (506, 508 und 510) aufweist, die so angeordnet sind, daß in der ersten Stellung (gezeichnete Stellung in Fig. 3), in der die Überbrückungskupplung (LUCL) geöffnet ist, der Wandlerzulaufdruck (CC) aus der Leitung (CC/COOLER) dem Drehmomentwandler über die Leitung (CC/EX) vor dem Überbrückungskupplungskolben zugeleitet wird und über die offene Überbrückungskupplung in den Wandler-Trilock-Bereich gelangt und von da als Wandlerrücklauf (CDC) über die Leitung (CDC/LUC) und die Leitung (COOLER) zum Kühler fließt, wobei in der zweiten, hochgeschalteten Stellung, in der die Überbrückungskupplung geschlossen ist, der Leitungsdruck (LINE) als Überbrückungs-kupplungsdruck (LUC) über die Leitung (CDC/LUC) in den Wandler-Trilock-Bereich geführt wird, während der Raum vor dem Überbrückungskupplungskolben als Wandlerrücklauf (EX) über die Leitung (CC/EX) zum Ölsumpf entlastet wird und der Wandlerzulaufdruck CC aus der Leitung (CC/COOLER) über die Leitung (COOLER) direkt dem Kühler zugeführt wird, dadurch gekennzeichnet, daß das Steuerventil (500) über das Schaltventil (520) angesteuert wird, dessen Ventilkörper (522) mit vier Steuerbünden (523, 524, 525 und 526) versehen ist und der über eine Feder (527) in einer ersten Stellung (gezeichnete Stellung in Fig. 3) gehalten ist und in Abhängigkeit von dem über ein Modulatorventil (530) am oberen Ende einwirkenden Drosseldruck (TVB/TV), dem am Bund (525) einwirkenden Leitungsdruck LINE, den am Bund (526) einwirkenden Betriebsdrücken bzw. Betriebsbereichdrücken (TDC/KD/2/1/R-I) und dem am unteren Ende entgegenwirkenden Fliehkraftreglerdruck (GOV) derart umschaltet, daß Leitungsdruck (LINE) als Überbrückungs-kupplung-Einrückdruck (LUC) geschwindigkeitsabhängig weitergegeben wird oder aber entlüftet wird.

2. Steuerventilsystem nach Anspruch 1, dadurch gekennzeichnet, daß ein 3-4 Schaltventil (550) vorgesehen ist, dessen Ventilkörper (551) drei Steuerbünde (552, 553 und 554) aufweist und über eine Feder (555) entgegen der Kraft des Fliehkraftreglerdruckes (GOV) belastet ist und ein auf den Ventilkörper (551) des 3-4 Schaltventils (550) einwirkendes Modulatorventil (556) vorgesehen ist, dessen Ventilkörper (557) einen Steuerbund (558) aufweist und über eine Feder (559) am Ventilkörper (551) des 3-4 Schaltventiles (550) abgestützt ist, wobei am Steuerbund (558) verstärkter Drosseldruck bzw. Drosseldruck (TVB/TV) einwirkt, um der in der Schaltposition « DE » durch den einwirkenden Fliehkraftreglerdruck (GOV) vorliegenden Hochschalttendenz entgegenzuwirken und wobei über den Steuerbund (552) in der Schaltposition « D » das 3-4 Schaltventil (550) in seiner Stellung für den 3. Gang hydraulisch blockierbar ist.

3. Steuerventilsystem nach den Ansprüchen 1 und 2, dadurch gekennzeichnet, daß ein Rückwärtsgang-Verhinderungsventil (580) vorgesehen ist, auf dessen Ventilkörper (582) einenends eine Feder (584) und anderenends der Fliehkraftreglerdruck (GOV) einwirkt, derart, daß bei einem Einlegen des Handwählventiles in die Schaltposition « R » bei hoher Fahrgeschwindigkeit das Rückwärtsgang-Verhinderungsventil (580) solange in seiner Sperrstellung gehalten wird, bis die Fahrgeschwindigkeit des Fahrzeuges unterhalb einer definierten Geschwindigkeit von z. B. 16 km/h abgesunken ist und das Beaufschlagen der entsprechenden Schaltelemente zum Einlegen des Rückwärtsganges vollzogen werden kann.

4. Steuerventilsystem nach den Ansprüchen 1 bis 3, dadurch gekennzeichnet, daß ein 2-3 Schaltventil (450) vorgesehen ist, dessen Ventilkörper (451) mit fünf Steuerbünden (452, 453, 454, 455, und 456) versehen ist und ein auf den Ventilkörper (451) einwirkendes Modulatorventil (457) vorgesehen ist, dessen Ventilkörper (458) einen Steuerbund (459) aufweist und über eine Feder (460) am Ventilkörper (451) des 2-3 Schaltventiles (450) abgestützt ist und wobei am Steuerbunde (459) verstärkter Drosseldruck (TVB) einwirkt und an den Steuerbünden (459 und 456) der Steuerdruck (MOD/KD/2/1/R-I) angreift während andererseits am Steuerbund (452) der Fliehkraftreglerdruck (GOV) angreift und wobei die Zuleitung der Steuerdrücke im gekennzeichneten Bereich derart modifiziert ist, daß bei Hochschaltlage des Ventils der Steuerdruck (2/1/R-I) nur auf den Steuerbund (455) wirkt, um bei einem Einlegen des Handwählventiles in die Schaltposition « 2 » bei zu hoher Fahrgeschwindigkeit das Betätigen der entsprechenden Schaltelemente solange zu verhindern, bis die Geschwindigkeit des Fahrzeuges unter einen vorbestimmten Wert, z. B. 1.18 km/h abgesunken ist und das Einlegen des 2. Ganges erfolgen kann.

5. Steuerventilsystem nach Anspruch 1, wobei für die besonders wichtigen 3-2 Abwärtsschaltungen bei unterschiedlichen Betriebsbereichen Komfort-Steuerventile, wie ein Schiebebetrieb-Steuerventil und ein Drehmomentbetrieb-Schaltventil vorgesehen ist, dadurch gekennzeichnet, daß zusätzlich zu einem 3-2 Schiebebetrieb-Steuerventil (600) und einem 3-2 Kick-Down-Schaltventil (640) weitere drei Komfort-Steuerventile, ein 3-2 Drehmomentbetrieb-Steuerventil (620) und diesem zugeordnete Drosselstellen (TD1 und TD2) sowie ein 3-2 Kick-Down-Steuerventil für die Kupplung CL2 (680) und ein 3-2 Kick-Down-

**0 162 352**

Steuerventil für den 2. Gang-Servo (B2, 660) mit diesen zugeordneten Drosselstellen (HC KD1 und HC KD2 bzw. ISR KD1 und ISR KD2) vorgesehen sind.

**Claims**

1. A hydraulic control valve system for an automatic multi-speed hydrokinetic-mechanical transmission for motor vehicles, with a torque converter with lock-up clutch and a gearbox with three planetary gear sets, a simple, first set whereof is disposed as an overdrive set in a first part and the two other sets arranged in the manner of a Simpson-type gear set being disposed in a second part of a gearbox housing, and where the converter drives a driving shaft (C), drivingly connected with the planetary gear carrier (P1) of the first set to which a first clutch (CL1) is allotted for connecting the planetary gear carrier (P1) with the sun gear (S1), to which in turn a brake drum and a first brake (B1) is allotted for anchoring and whose ring gear (R1) forms a driven member drivingly connected with a central shaft (M) and where an overrunning clutch (OWC1) is inserted between the planetary gear carrier (P1) and the central shaft (M), said overrunning clutch blocking under torque conditions of the first through third gears and in reverse gear but not in the fourth gear, and where the central shaft (M) forms the driving shaft for the Simpson-type gear set and is connectable by way of a second clutch (CL2) with the integral sun gears (S2 and S3) or, respectively, by way of a third clutch (CL3) with the ring gear (R2), a brake drum and a second brake (B2) being allotted to the second clutch (CL2) for anchoring the two sun gears, the planetary gear carrier (C2) of the second set and the ring gear (R3) of the third set being drivingly connected with the driven shaft (O), an overrunning clutch (OWC2) for anchoring at the housing in one braking direction and, respectively, a brake drum with a third brake (B3) for anchoring in both directions of rotation being allotted to the planetary gear carrier (P3) of the third set, the clutches and brakes being automatically switchable by means of hydraulically actuated pistons or servos in dependence upon the positions of a manual valve and/or upon the operating conditions of the vehicle, a first gear being selected by engaging the third clutch (CL3), a second gear by additionally applying the second brake (B2), a third gear by engaging the second clutch (CL2) and releasing the second brake (B2), a fourth gear laid out as overdrive gear by applying the first brake (B1) with the second clutch (CL2) and the third clutch (CL3) left engaged and a reverse gear by engaging the first clutch (CL1) and the second clutch (CL2) and applying the third brake (B3) with a torque converter lock-up clutch (LUCL) additionally engaged in the third and fourth gear, a line pressure (LINE) being produced by a pressure fluid pump by way of an oil pressure control valve (202) and an oil pressure booster valve (214) in dependence upon a throttle-pressure valve (230) supplying pressure signals corresponding to the torque demand and upon a governor valve (144) supplying pressure signals corresponding to the velocity of travel, said line pressure (LINE) being fed by way of a manual valve (300) to a plurality of shift- and control valves which are additionally affected by the pressure signals of the throttle pressure valve (230) and of the governor valve (144) to actuate the automatic shifts, a lock-up clutch control valve (500) and a lock-up clutch switch valve (520) cooperating with the latter being provided, the control valve (500) comprising a spring (502) loaded valve spindle (504) fitted with three control lands (506, 508 and 510) arranged so that in the first position (the position shown in Fig. 3), in which the lock-up clutch (LUCL) is open, the converter feed pressure (CC) from the line (CC/COOLER) is supplied to the torque converter by way of the line (CC/EX) before the lock-up clutch piston and arrives by way of the open lock-up clutch in the converter trilock region and flows from there as converter return flow (CDC) by way of the line (CDC/LUC) and the line (COOLER) to the cooler, the line pressure (LINE) being passed in the second, upshifted position, in which the lock-up clutch is closed, as lock-up clutch pressure (LUC) by way of the line (CDC/LUC) into the converter trilock region, the space before the lock-up clutch piston being relieved as converter return flow (EX) to the oil sump by way of the line (CC/EX) and the converter feed pressure CC being supplied from the line (CC/COOLER) by way of the line (COOLER) directly to the cooler, characterized in that the control valve (500) is addressed by way of the switch valve (520), whose valve spindle (522) is fitted with four control lands (523, 524, 525 and 526), is held in a first position (the position shown in Fig. 3) by a spring (527) and is changed over, in dependence upon the throttle pressure (TBV/TV) acting by way of a modulator valve (530) on the upper end, the line pressure LINE acting on the land (525), the operating pressures or operating pressure ranges (TDC/KD/2/1/R-I) acting on the land (526) and the governor pressure (GOV) counteracting at the lower end, in such a manner that the line pressure (LINE) is passed on or, on the other hand, vented as lock-up clutch engaging pressure (LUC) in dependence upon the velocity.

2. A control valve system according to claim 1, characterized in that a 3-4 shift valve (550) is provided, whose valve spindle (551) has three control lands (552, 553 and 554) and is biased by a spring (555) against the force of the governor pressure (GOV) and that a modulator valve (556) acting on the valve spindle that a modulator valve (556) acting on the valve spindle (551) of the 3-4 shift valve (550) is provided, the valve spindle (557) of the modulator valve (556) having one control land (558) which bears by way of a spring (559) against the valve spindle (551) of the 3-4 shift valve (550), the control land (558) being acted upon by boosted throttle pressure or the throttle pressure (TVB/TV) in order to counteract the upshifting trend resulting in the shifting position « DE » from the governor pressure (GOV) and the 3-4 shift valve (550) being hydraulically blockable in its position for the third gear by way of the control land

12

(552) in the shifting position « D ».

3. A control valve system according to claims 1 and 2, characterized in that a reverse gear backout valve (580) is provided whose valve spindle (582) is acted upon at one end by a spring (584) and at the other end by the governor pressure (GOV) in such a manner that, with the manual valve moved at high velocity of travel into the shifting position « R », the reverse gear backout valve (580) is held in its blocking position until the velocity of travel drops under a defined speed, e. g., 16 km/h, and the corresponding shifting elements can be actuated to engage the reverse gear.

4. A control valve system according to claims 1 through 3, characterized in that a 2-3 shift valve (450) is provided whose valve spindle (451) is fitted with five control lands (452, 453, 454, 455 and 456) and that a modulator valve (457) is provided acting on the valve spindle (451), the valve spindle (458) of the modulator valve (459) having one control land (459) and bearing by way of a spring (460) against the valve spindle (451) of the 2-3 shift valve (450), boosted throttle pressure (TVB) acting on the control land (459) and the control pressure (MOD/KD/2/1/R-I) acting on the control lands (459 and 456) while, on the other hand, the governor pressure (GOV) acts on the control land (452) and where the supply of the control pressures is modified in such a manner that, when the valve is in the upshifted position, the control pressure (2/1/R-I) acts only on the control land (455) in order to prevent, when the manual valve is moved at too high a velocity of travel to the shifting position « 2 », the actuation of the corresponding shifting elements is prevented until the velocity of the vehicle drops under a predetermined value, e. g., 118 km/h, and the second gear can be engaged.

5. A control valve system according to claim 1, wherein comfort control valves such as a coasting condition control valve and a torque condition shift valve are provided for the particularly important 3-2 down shifts in diverse operating ranges, characterized in that, in addition to a 3-2 coasting condition control valve (600) and a 3-2 kick-down shift valve (640), three further comfort control valves are provided, namely a 3-2 torque condition control valve (620) with throttle orifices (TD1 and TD2) allotted to it as well as a 3-2 kick-down control valve for the clutch CL2 (680) and a 3-2 kick-down control valve for the second-gear servo (B2, 660) with throttle orifices (HC KD1 and HC KD2 and, respectively, ISR KD1 and ISR KD2) allotted to them.

## Revendications

1. Système hydraulique de valves de commande pour une boîte de vitesses automatique hydrocinéti-que-mécanique pour véhicules automobiles, comprenant un convertisseur de couple à embrayage de prise directe et une boîte de vitesses à trois trains planétaires, dont un premier train simple est disposé, sous forme de train précurseur, dans une première partie d'un carter de boîte et dont les deux autres trains sont disposés dans une seconde partie du carter de boîte à la manière d'un train Simpson, le convertisseur entraînant un arbre moteur (C) qui est relié de manière motrice au porte-planétaire (P1) du premier train auquel est affecté un premier dispositif d'accouplement (CL1) pour relier le porte-planétaire (P1) à la roue solaire (S1) à laquelle sont à son tour affectés un tambour de frein et un premier frein (B1) d'arrêt et dont le pignon annulaire (R1) forme un organe de sortie qui est relié de manière motrice à un arbre central (M), entre le porte-planétaire (P1) et l'arbre central (M) étant engagé un accouplement indirectionnel (OWC1) qui se bloque dans le régime de couple-moteur des vitesses 1 à 3 et marche arrière, mais pas en 4e vitesse, l'arbre central M formant l'arbre moteur du train Simpson et pouvant être relié, par l'intermédiaire d'un deuxième dispositif d'accouplement (CL2), aux roues solaires reliées (S2 et S3) ou, respectivement, par l'intermédiaire d'un troisième dispositif d'accouplement (CL3), au pignon annulaire (R2), un tambour de frein et un deuxième frein B2 pour immobiliser les deux roues solaires étant affectés au deuxième dispositif d'accouplement (CL2), le porte-planétaire (C2) du deuxième train et le pignon annulaire (R3) du troisième train étant reliés de manière motrice à l'arbre de sortie (O), et au porte-planétaire (P3) du troisième train étant affectés un frein indirectionnel (OWC2) monté sur le carter pour réaliser un arrêt dans un sens de freinage ou, respectivement, un tambour de frein muni d'un troisième frein (B3) pour réaliser un arrêt dans les deux sens de rotation, les dispositifs d'accouplement et les freins pouvant être sollicités automatiquement par l'intermédiaire de pistons et, respectivement, de dispositifs d'asservissement à commande hydraulique en fonction de la position d'une valve de sélection manuelle et/ou d'états de fonctionnement du véhicule, une 1re vitesse étant enclenchée en embrayant le troisième dispositif d'accouplement (CL3), une 2e vitesse étant enclenchée en actionnant en plus le deuxième frein (B2), une 3e vitesse étant enclenchée en embrayant le deuxième dispositif d'accouplement (CL2) et en relâchant le deuxième frein (B2), et une 4e vitesse, conçue sous la forme d'une vitesse surmultipliée, étant enclenchée en actionnant le premier frein (B1) alors que les deuxième et troisième dispositifs d'accouplement (CL2 et CL3) restent embrayés, et une marche arrière étant enclenchée lorsque le premier dispositif d'accouplement (CL1) est embrayé, lorsque le deuxième dispositif d'accouplement (CL2) est embrayé et lorsque le troisième frein (B3) est actionné, et un embrayage de prise directe de convertisseur de couple (LUCL) étant également embrayé en 3e et 4e vitesses, une pression de conduite (LINE) étant établie par une pompe d'agent de pression par l'intermédiaire d'une valve de régulation de pression d'huile (202) et d'une valve d'amplification de pression d'huile (214) en fonction d'une valve de pression d'étranglement (230) fournissant des signaux de pression correspondant au couple demandé et

**0 162 352**

d'une valve de régulation centrifuge (144) fournissant des signaux de pression correspondant à la vitesse de marche, cette pression de conduite (LINE) étant envoyée, par l'intermédiaire d'une valve de sélection manuelle (300), à des valves de commutation et de commande qui reçoivent également les signaux de pression de la valve de pression d'étranglement (230) et de la valve de régulation centrifuge (144) pour réaliser des commutations automatiques, une valve de commande d'embrayage de prise directe (500) et une valve de commutation d'embrayage de prise directe (520) reliée à cette dernière étant prévue, la valve de commande (500) étant constituée par un tiroir (504) qui est sollicité par un ressort (502) et qui comporte trois portées de commande (506, 508 et 510) qui sont disposées de manière que, dans la première position (représentée à la figure 3), dans laquelle l'embrayage de prise directe (LUCL) est ouvert, la pression d'arrivée au convertisseur (CC) provenant de la conduite (CC/COOLER) est transmise au convertisseur de couple par l'intermédiaire de la conduite (CC/EX) devant le piston d'embrayage de prise directe et parvient, par l'intermédiaire de l'embrayage de prise directe ouvert, dans la zone intermédiaire du convertisseur et, de là, s'écoule sous la forme d'un retour de convertisseur (CDC), par l'intermédiaire de la conduite (CDC/LUC) et de la conduite (COOLER), vers le refroidisseur, dans la seconde position haute, dans laquelle l'embrayage de prise directe est fermé, la pression de conduite (LINE) étant transmise dans la zone intermédiaire du convertisseur sous la forme d'une pression d'embrayage de prise directe (LUC) par l'intermédiaire de la conduite (CDC/LUC), tandis que l'espace situé devant le piston d'embrayage de prise directe est évacué, sous la forme d'un retour de convertisseur (EX), par l'intermédiaire de la conduite (CC/EX), en direction du carter d'huile, et la pression d'arrivée au convertisseur CC étant directement envoyée de la conduite (CC/COOLER) au refroidisseur par l'intermédiaire de la conduite (COOLER), caractérisé en ce que la valve de commande (500) est commandée, par l'intermédiaire de la valve de commutation (520) dont le tiroir (522) comporte quatre portées de commande (523, 524, 525 et 526) et qui est maintenue dans une première position (représentée à la figure 3) par l'intermédiaire d'un ressort (527) et est commutée en fonction de la pression d'étranglement (TVB/TV) agissant à l'extrémité supérieure par l'intermédiaire d'une valve de modulateur (530), de la pression de conduite LINE agissant sur la portée (525), des pressions de régime ou, respectivement, des pressions de plages de régime (TDC/KD/2/1/R-I) agissant sur la portée (526) et de la pression de régulateur centrifuge (GOV) agissant dans le sens inverse sur l'extrémité inférieure, de façon que la pression de conduite (LINE) soit transmise en fonction de la vitesse sous la forme d'une pression d'embrayage de prise directe (LUC) ou évacuée.

2. Système de valves de commande conforme à la revendication 1, caractérisé en ce qu'il est prévu une valve de commutation 3-4 (550) dont le tiroir (551) comporte trois portées de commande (552, 553 et 554) et est sollicité par l'intermédiaire d'un ressort (555) à l'encontre de la force de la pression de régulateur centrifuge (GOV) et il est prévu une valve de modulation (556) qui agit sur le tiroir (551) de la valve de commutation 3-4 et dont le tiroir (557) comporte une portée de commande (558) et est en appui sur le tiroir (551) de la valve de commutation 3-4 (550) par l'intermédiaire d'un ressort (559), une pression d'étranglement amplifiée ou, respectivement, une pression d'étranglement (TVB/TV) agissant sur la portée de commande (558) pour agir à l'encontre de la tendance au changement de vitesse ascendant provoquée par la pression de régulateur centrifuge (GOV) dans la position de commutation « DE », la valve de commutation 3-4 (550) pouvant être bloquée hydrauliquement, par l'intermédiaire de la portée de commande (552), en position de commutation « D », dans sa position correspondant à la 3e vitesse.

3. Système de valves de commande conforme aux revendications 1 et 2, caractérisé en ce qu'il est prévu une valve de blocage de marche arrière (580), sur le tiroir (582) de laquelle agit, d'une part, un ressort (584) et, d'autre part, la pression du régulateur centrifuge (GOV), de manière que, lors du passage de la valve de sélection manuelle en position « R » à vitesse élevée, la valve de blocage de marche arrière (580) est maintenue en position bloquée jusqu'à ce que la vitesse de marche du véhicule soit redescendue en dessous d'une vitesse définie, par exemple 16 km/h, et que les éléments de commutation correspondants servant à enclencher la marche arrière puissent être sollicités.

4. Système de valves de commande conforme aux revendications 1 à 3, caractérisé en ce qu'il est prévu une valve de commutation 2-3 dont le tiroir (451) est muni de cinq portées de commande (452, 453, 454, 455 et 456), et il est prévu une valve de modulation qui agit sur le tiroir (451) et dont le tiroir (458) comporte une portée de commande (459) et est en appui sur le tiroir (451) de la valve de commutation 2-3 (450) par l'intermédiaire d'un ressort (460), une pression d'étranglement amplifiée (TVB) agissant sur la portée de commande (459), et la pression de commande (MOD/KD/2/1/R-I) agissant sur les portées de commande (459 et 456), tandis que, d'une part, la pression du régulateur centrifuge (GOV) agit sur les portées de commande (452), l'arrivée des pressions de commande dans la partie indiquée étant modifiée de façon que, lorsque la valve est en position haute, la pression de commande (2/1/R-I) n'agit que sur la portée de commande (455) pour, en cas de sélection de la position de commutation « 2 » à l'aide de la valve de sélection manuelle, empêcher l'actionnement des éléments de commutation correspondants jusqu'à ce que la vitesse du véhicule soit redescendue en dessous d'une valeur prédéterminée, par exemple 118 km/h, et que la 2e vitesse puisse être enclenchée.

5. Système de valves de commande conforme à la revendication 1, comprenant, pour les rétrogradations 3-2 particulièrement importantes dans différentes plages de régime, des valves de commande de confort, telles qu'une valve de commande de roulement en propulsion et une valve de commutation à régime de couple, caractérisé en ce qu'en plus d'une valve de commande en propulsion

14

(600) et d'une valve de commutation de rétrogradation forcée 3-2 (640), il est prévu trois valves de commande de confort, une valve de commutation à régime de couple 3-2 (620) et des points d'étranglement (TD1 et TD2) affectés à cette dernière, ainsi qu'une valve de commande de rétrogradation forcée 3-2 pour le dispositif d'accouplement CL2 (680) et une valve de commande de rétrogradation forcée 3-2 pour le dispositif d'asservissement de 2$^e$ vitesse (B2, 660) associée aux points d'étranglement correspondants (HC KD1 et HC KD2 ou, respectivement, ISR KD1 et ISR KD2).

0 162 352

FIG. 1a.
1. Gang in DE
1st Gear in DE

FIG.1b
2. Gang in DE
2nd Gear in DE

FIG.1c
3. Gang in DE
3rd Gear in DE

FIG.1d
4. Gang in DE
4th Gear in DE

FIG. 1e

Rw - Gang
Reverse Gear

FIG. 1f

1. Gang in 1
1st Gear in 1

FIG. 1g

2. Gang in 2
2nd Gear in 2

| WÄHLHEBEL-POSITIONEN | | REIB- UND REAKTIONS-ELEMENTE IN FUNKTION | | | | | | | | |
|---|---|---|---|---|---|---|---|---|---|---|
| | | LUCL | CL$_1$ | B$_1$ | OWC$_1$ | CL$_2$ | CL$_3$ | B$_2$ | B$_3$ | OWC$_2$ |
| P | PARK | | | | | | | | | |
| R | RÜCKWÄRTSGANG (FIG.1e) | | ■ | | ■ | | | | ■ | |
| N | NEUTRAL | | | | | | | | | |
| DE | VORWÄRTS (DRIVE ECONOMY) (FIG.1a) 1 | | | | | ■ | | | | ■ |
| | (1b) 2 | | | | | ■ | ■ | | | |
| | (1c) 3 | ■ | | | | ■ | | ■ | | |
| | (1d) 4 | ■ | | | ■ | ■ | | | | |
| D | VORWÄRTS (DRIVE) (1a) 1 | | | | | ■ | | | | ■ |
| | (1b) 2 | | | | | ■ | ■ | | | |
| | (1c) 3 | ■ | | | | ■ | ■ | | | |
| 2 | 2. GANG (FIG.1g) | | ■ | | | ■ | ■ | | | |
| 1 | 1. GANG (FIG.1f) | | ■ | | | ■ | ■ | | ■ | |

FIG. 2

0 162 352

FIG. 3A

TV

TV-ÜBERDRUCKVENTIL

4. GANG SERVO/B₁

OSR-ACC — LINE

RELEASE

APPLY RELEASE

LINE

ISR

KÜHLER

OVERDRIVE SERVO RELEASE ACCUM.

BYPASS

SUMPF

ISR ACC

FILTER

B2 AKKUMULATOR (166)

B1 AKKUMULATOR (570)

3-4 DAMPF. VENT. 560

3-2 CL2 KICKDOWN-STEUERV. 680

3-2 B2 KICKDOWN-STEUERV. 660

3-2 KICKDOWN-SCHALTVENTIL 640

BYPASS

COOLER

OSR-ACC

(166)

ISR

HC KD 1

HC EX

HC EX

680

HC REL

ISR ACC

HC REL

SAUG-BEREICH

OSR-ACC

(570) — OSR-EX

OSR-EX

OSR-EX — OSR-EX

560

GOV.

ISR KD EX

660

ISR KD EX

GOV

GOV

ISR ACC

ISR KD 1

D3/R-I-HC REL

HC KD 2

D3/R-I-HC REL

VORW. BZW. DRITTE KUPPLUNG/CL3

D/3/2/1

ISR KD 2

TVB

KD/3/2/1/R

TV/TVB

FIG. 3B

FIG. 3C

0 162 352

FIG. 3D

FIG.4

VAKUUM  KN/m²

GESCHWINDIGKEIT

km / h

0 = EINBAULAGE    1 = SCHALTLAGE

| SCHIEBEBETRIEB-STEUERVENTIL (276) | DREHMOMENTBETRIEB-SCHALTVENTIL (278) | ABGESTIMMTE SCHALTUNG |
|---|---|---|
| 0 | 1 | 3-2 MAN.SCHIEBEBETRIEB |
| 0 | 0 | 3-2 SCHIEBEBETRIEB |
| 1 | 1 | 3-2 KD-SCHALTUNG |
| 1 | 0 | 3-2 TD-SCHALTUNG |

# FIG.5

# FIG.6

0 = EINBAULAGE
1 = SCHALTLAGE
X = STELLUNG FÜR FUNKTION UNERHEBLICH

| KOMFORT-STEUERVENTILE | | | | | ABGESTIMMTE SCHALTUNG IM BETRIEBSBEREICH: |
|---|---|---|---|---|---|
| 3-2 SCHIEBE-BETRIEB-STEUERVENTIL | 3-2 DREHMOMENT-BETRIEB-STEUERVENTIL | 3-2 KICK-DOWN-SCHALTVENTIL | 3-2 KICK-DOWN-STEUERVENTIL FÜR 2. GANG-SERVO B2 | 3-2 KICK-DOWN-STEUERVENTIL FÜR 3. GANG-SERVO CL 2 | |
| 600 | 620 | 640 | 660 | 680 | |
| 0 | 0 | X | X | X | 3-2 MAN.SCHIEBEBETRIEB |
| 0 | 1 | 1 | 1 | X | 3-2 MAN.SCHIEBEBETRIEB |
| 0 | 1 | 1 | 0 | X | 3-2 MAN.SCHIEBEBETRIEB |
| 1 | 0 | X | X | X | 3-2 TD 1.BEREICH |
| 1 | 1 | X | X | X | 3-2 TD 2.BEREICH |
| 1 | 1 | 1 | 0 | 0 | 3-2 KD 1.BEREICH |
| 1 | 1 | 1 | 1 | 0 | 3-2 KD 2.BEREICH |
| 1 | 1 | 1 | 1 | 1 | 3-2 KD 3.BEREICH |

0 162 352